# EUROPEAN PATENT APPLICATION

(11) **EP 4 834 455 A1**
(43) Date of publication of application: **04.11.2026**
(21) Application number: 26167074.9
(22) Date of filing: 24.03.2026
(51) Int. Cl.: B01D 35/143, A47L 9/20, A47L 9/28, B01D 46/04, B01D 46/44, B01D 46/46, B01D 46/71

(54) **METHOD AND APPARATUS FOR EXTRACTING DUST GENERATED BY USING A POWER TOOL**

(30) Priority: 30.04.2025 FI 20253166
(71) Applicant: Mirka Ltd, 66850 Jepua (FI)
(72) Inventor: LINQVIST, Tommy, 66900 Nykarleby (FI); BÄCK, Simon, 66600 Vörå (FI)
(74) Representative: Berggren Oy

(57) **Abstract**

An apparatus (1000) comprises a dust extractor (500) to extract dust particles (DUST1) produced during operation of a power tool (TOOL1),
wherein the dust extractor (500) comprises:
- a fan (FAN1) to cause an airflow (AIR1),
- a motor (M1) to rotate the fan (FAN1),
- a filter (FIL1) to separate dust particles (DUST1) from the airflow (AIR1),
- a filter cleaning unit (FCU1) to automatically clean (AFC) the filter (FIL1) with cleaning air pulses (PU),
- a current measuring unit (AM2) to measure an electric current (P_{M}) drawn by the power tool (TOOL1),
- a control unit (CNT1) to control operation of the dust extractor (500),

wherein the control unit (CNT1) is arranged to compare the measured electric current (P_{M}) with an auto-clean limit value (LIM0), and to control automatic cleaning (AFC) of the filter (FIL1) based on a result of the comparison.

## Description

### FIELD

The present invention relates to extracting dust generated by using a power tool.

### BACKGROUND

A workpiece may be processed with a power tool so that the processing generates dust particles. A known dust extractor is arranged to draw a dust-laden airflow from the power tool via a hose. The dust extractor comprises a filter to separate dust from the airflow. The separated dust forms a layer, which may remain on the surface of the filter. The dust layer increases the pressure difference across the filter, which in turn reduces the suction power of the dust extractor. The known dust extractor is arranged to clean the filter at regular intervals with cleaning air pulses. The airflow in the hose may temporarily stop during cleaning of the filter. Temporary stopping of the airflow may cause emission of a harmful dust plume from the power tool.

### SUMMARY

An object is to provide an apparatus for extracting dust particles produced during operation of a power tool. An object is to provide a method for extracting dust particles produced with a power tool.

According to an aspect, there is provided an apparatus (1000), comprising a dust extractor (500) to extract dust particles (DUST1) produced during operation of a power tool (TOOL1),
the dust extractor (500) comprising:
   - a fan (FAN1) to cause an airflow (AIR1),
   - a motor (M1) to rotate the fan (FAN1),
   - a filter (FIL1) to separate dust particles (DUST1) from the airflow (AIR1),
   - a filter cleaning unit (FCU1) to automatically clean (AFC) the filter (FIL1) with cleaning air pulses (PU),
   - a current measuring unit (AM2) to measure an electric current (P_{M}) drawn by the power tool (TOOL1),
   - a control unit (CNT1) to control operation of the dust extractor (500),
wherein the control unit (CNT1) is arranged to compare the measured electric current (P_{M}) with an auto-clean limit value (LIMO), and to control automatic cleaning (AFC) of the filter (FIL1) based on a result of the comparison.

According to an aspect, there is provided a method, comprising:
- producing dust (DUST1) with a power tool (TOOL1),
- extracting the produced dust (DUST1) with a dust extractor (500),
- measuring an electric current (P_{M}) of the power tool (TOOL1),
wherein the dust extractor (500) comprises:
- a fan (FAN1) to cause an airflow (AIR1),
- a motor (M1) to rotate the fan (FAN1),
- a filter (FIL1) to separate dust particles (DUST1) from the airflow (AIR1), and
- a filter cleaning unit (FCU1) to automatically clean (AFC) the filter (FIL1) with cleaning air pulses (PU),
wherein the method further comprises:
- measuring an electric current (P_{M}) drawn by the power tool (TOOL1),
- comparing the measured electric current (P_{M}) with an auto-clean limit value (LIMO), and
- controlling automatic cleaning (AFC) of the filter (FIL1) based on a result of said comparison.

According to an aspect, there is provided an apparatus according to claim 1.

Further embodiments are defined in the other claims.

The scope of protection sought for various embodiments of the invention is set out by the independent claims. The embodiments, if any, described in this specification that do not fall under the scope of the independent claims are to be interpreted as examples useful for understanding various embodiments of the invention.

The apparatus comprises a dust extractor. The dust extractor comprises a filter to separate dust from the airflow. The apparatus may be arranged to clean the filter only when the power tool is not in active use. The apparatus may be arranged to clean the filter only when the power tool is not processing a workpiece. The apparatus may be arranged to delay a filter cleaning operation when the power tool is in active use. Consequently, it may be possible to reduce or avoid emission of a harmful dust plume during active operation of the power tool.

Delaying the cleaning of the filter when the power tool is in active use can reduce or avoid the emission of the harmful dust plume. This is because the airflow in the hose may temporarily stop during cleaning of the filter, which could cause the emission of dust particles into the environment. By delaying the cleaning until the power tool is no longer in active use, the system can maintain continuous dust extraction and minimize the risk of releasing dust into the surroundings. This approach helps to ensure a cleaner and safer working environment by preventing the spread of dust particles during the operation of the power tool.

The dust extractor may be arranged to clean the filter repetitively, so as to maintain a sufficient suction power of the dust extractor. The filter may be cleaned repetitively e.g. at regular time intervals, or the filter may be cleaned e.g. when the pressure difference across the filter exceeds a predetermined value. The dust extractor may be arranged to allow the cleaning before active use of the power tool and/or after active use of the power tool. The dust extractor may be arranged to prevent the cleaning during the active use of the power tool.

The dust extractor may be arranged to clean the filter with cleaning air pulses. The cleaning air pulses may temporarily reverse the direction of the airflow passing through the filter, so as to release deposited dust particles from the filter.

The dust extractor may be arranged to draw a dust-laden airflow from a power tool. The power tool may be e.g. a sander, which may produce dust during active use. The apparatus may be arranged to reduce or avoid emission of a harmful dust plume, which could be caused by activation of the filter cleaning function during active operation of the power tool. The control unit of the dust extractor may be arranged to delay automatic filter cleaning when the power tool in active use.

The apparatus may comprise a current measuring unit for measuring the electric current drawn by the power tool. Automatic cleaning of the filter of the dust extractor may be controlled based on the electric current drawn by the power tool.

A higher electric current may be interpreted to be an indication of active use of the power tool. A lower electric current may be interpreted to be an indication of a stopped state or idling of the power tool. The power tool may be idling so that the motor of the power tool is rotating but not performing active work. Yet, zero electric current or a very low electric current may be interpreted to be an indication that the power tool has been stopped

The power tool may produce a lot of dust during active use, e.g. during heavy sanding. The cleaning air pulses may temporarily stop the airflow from the power tool to the dust extractor. Preventing the cleaning of the filter during the active use may reduce or avoid emission of dust. A risk of emitting a harmful dust plume during the cleaning pulses may be reduced or avoided by measuring the current consumption of the power tool, and by disabling the automatic filter cleaning while the power tool is in active use. Controlling the automatic filter cleaning based on the measured electric current of the power tool may reduce or avoid release of hazardous dust to the environment.

The control unit of the dust extractor may be arranged to control the automatic filter cleaning by comparing the current with an auto-clean limit value. The control unit may be arranged to prevent or delay automatic filter cleaning e.g. when the current is higher than the auto-clean limit. The control unit of the dust extractor may use the auto-clean limit for enabling and disabling activation of the automatic filter cleaning, based on the measured electric current of the power tool.

The auto-clean limit may be greater than the idle current of the power tool. The auto-clean limit may be lower than the minimum current during active use. The auto-clean limit may be e.g. in the range of 105% to 200% of the idle current of the power tool. The auto-clean limit may be e.g. in the range of 110% to 200% of the idle current of the power tool. The auto-clean limit may be e.g. in the range of 110% to 150% of the idle current of the power tool.

The control unit of the dust extractor may be arranged to enable a filter cleaning operation in a delayed manner after the control unit detects that the current does not exceed the auto-clean limit. The filter cleaning operation may be performed in the delayed manner e.g. in order to ensure that dust produced during active operation of the power tool has been extracted to a sufficient degree.

The control unit may wait for a safety time period before starting a filter cleaning operation, in order to further reduce emission of dust from the apparatus. The safety time period may e.g. allow removing loose dust from the suction hose before start of the filter cleaning operation. The control unit may be arranged to perform a filter cleaning operation at the end of a first safety time period if the current does not exceed the auto-clean limit during said first safety time period.

The control unit of the dust extractor may use a first safety time period for further reducing emission of dust to the environment. The control unit may be arranged to wait during the first safety time period after active use of the power tool has been stopped, before the control unit starts a filter cleaning operation. Consequently, emission of dust may be reduced or avoided also in a situation where the power tool is lifted away from the workpiece immediately after the active use of the power tool has been stopped. The length of the first safety time period may be e.g. in the range of 1 s to 10 s, advantageously in the range of 2 s to 4 s.

In an embodiment, the control unit may cancel or abort a filter cleaning operation if the measured electric current of the power tool exceeds the auto-clean limit during a preceding safety time period or during the cleaning operation.

The dust extractor may have an auto-start functionality, which means that rotation of the suction fan of the dust extractor may be started when the current of the power tool exceeds an auto-start limit. The control unit may be arranged to start rotation of the suction fan of the dust extractor when the current of the power tool becomes higher than the auto-start limit.

The dust extractor may have an auto-stop functionality, which means that rotation of the suction fan of the dust extractor may be stopped if the current of the power tool remains lower than or equal to an auto-stop limit. The control unit may determine e.g. based on the current that operation of the power tool has been stopped, and the control unit may subsequently shut down the suction of the dust extractor.

The apparatus may be arranged to provide a delayed shutdown, so as to further reduce the risk of a dust plume. The control unit of the dust extractor may be arranged to stop rotation of the suction fan in a delayed manner, e.g. in order to ensure that the hose is sufficiently dust-free when the rotation is stopped. Rotation of the suction fan of the dust extractor may be continued during one or more safety time periods after operation of the power tool has been stopped. Rotation of the suction fan may be stopped in a delayed manner if the current of the power tool remains lower than or equal to the auto-stop limit, provided that one or more additional conditions are fulfilled.

The control unit may be arranged to control rotation of the suction fan by comparing the current with an auto-start limit and with an auto-stop limit. The term "auto-start" means automatic starting. The term "auto-stop" means automatic stopping. The term "auto-clean" means automatic cleaning. The control unit may be arranged to start rotation of the suction fan of the dust extractor when the measured electric current of the power tool exceeds an auto-start limit value.

The control unit may be arranged to start a shutdown procedure for stopping rotation of the suction fan when the measured electric current of the power tool falls to a value which is smaller than or equal to an auto-stop limit value. In an embodiment, the control unit may be arranged to stop rotation of the suction fan at the end of the shutdown procedure e.g. if the filter is clean and if the measured electric current of the power tool does not exceed the auto-start limit value during the shutdown procedure.

The control unit of the dust extractor may use several limit values for controlling the operation, namely:
- an auto-start limit for controlling starting rotation of the suction fan,
- an auto-stop limit for controlling stopping rotation of the suction fan, and
- an auto-clean limit for controlling automatic cleaning of the filter.

The dust extractor may be arranged to activate automatic filter cleaning also during the delayed shutdown, thereby further reducing the risk for emission of a dust plume. The dust extractor may be arranged to perform one or more filter cleaning operations during the delayed shutdown. Performing filter cleaning operations during the shutdown may ensure that the filter is properly cleaned and ready for a next processing operation with the power tool. Performing one or more filter cleaning operations during the shutdown may also reduce the risk of emitting dust when the power tool is separated from the hose and when the hose is separated from the dust extractor.

In an embodiment, the control system of the apparatus may also be arranged to measure whether the filter has been cleaned to a sufficient degree. The control system may measure e.g. the pressure difference across the filter, and the control system may determine based on the pressure difference whether the filter has been cleaned to a sufficient degree after a filter cleaning operation. The control system may be arranged to perform one or more additional filter cleaning operations if the measurement indicates that the filter has not yet been cleaned to a sufficient degree.

The dust extractor may also check whether the air flow rate via the suction fan is higher than or equal to a predetermined minimum value. The dust extractor may be arranged to start forced cleaning of the filter if the measured air flow rate via the suction fan is lower than the predetermined minimum value. The control unit of the dust extractor may override delaying of the cleaning in order to increase air flow rate to a sufficient level.

In an embodiment, the power tool may comprise a memory for storing tool-specific data of the power tool. The data stored in the memory of the power tool may comprise e.g. an auto-start limit, an auto-stop limit and/or an auto-clean limit for the power tool. The data may be communicated from the power tool to the dust extractor via a communication link. The data may be communicated from the power tool to the dust extractor e.g. via a wireless communication link. The dust extractor may receive the auto-start limit, the auto-stop limit and/or the auto-clean limit. The control unit of the dust extractor may use the auto-clean limit for enabling and disabling activation of the automatic filter cleaning, based on the current of the power tool.

In an embodiment, the control unit may be arranged to initiate a shutdown also when the dust extractor receives a control signal from the power tool via a communication link, and wherein the received control signal indicates that rotation of the motor of the power tool has been stopped. Thus, the control unit may detect that the power tool is stopped based on a control signal, instead of or in addition to detecting the stop based on the measured electric current of the power tool. Using the control signal may increase reliability of detecting the operating state of the power tool. The control signal may be received e.g. via a communication link, e.g. via Bluetooth (registered trademark). Once the shutdown has been initiated, the control unit may stop rotation of the suction fan at the end of the shutdown e.g. if the filter is clean at the end of the shutdown, if the measured electric current has not exceeded the auto-clean limit during the shutdown, and if the shutdown is not cancelled before the end of the shutdown.

### BRIEF DESCRIPTION OF THE DRAWINGS

In the following examples, several variations will be described in more detail with reference to the appended drawings, in which
- Fig. 1a: shows, by way of example, in a cross-sectional side view, the apparatus, which comprises the dust extractor and a power tool,
- Fig. 1b: shows, by way of example, in a cross-sectional side view, cleaning the filter of the dust extractor with cleaning air pulses,
- Fig. 2a: shows, by way of example, method steps for controlling cleaning of the filter and for controlling rotation of the fan,
- Fig. 2b: shows, by way of example, method steps for controlling cleaning of the filter and for controlling rotation of the fan,
- Fig. 2c: shows, by way of example, timing of operations,
- Fig. 3a: shows, by way of example, timing of cleaning and timing of rotation of the fan,
- Fig. 3b: shows, by way of example, timing of cleaning and timing of rotation of the fan,
- Fig. 3c: shows, by way of example, timing of cleaning and timing of rotation of the fan,
- Fig. 3d: shows, by way of example, timing of cleaning and timing of rotation of the fan,
- Fig. 3e: shows, by way of example, repetitive cleaning of the filter,
- Fig. 4a: shows, by way of example, timing of cleaning and timing of rotation of the fan,
- Fig. 4b: shows, by way of example, timing of cleaning and timing of rotation of the fan,
- Fig. 4c: shows, by way of example, timing of cleaning and timing of rotation of the fan,
- Fig. 5a: shows, by way of example, in a cross-sectional side view, the apparatus, which comprises the dust extractor and a power tool,
- Fig. 5b: shows, by way of example, a control system of the apparatus,
- Fig. 6: shows, by way of example, in a three-dimensional view, the apparatus, which comprises the dust extractor and a power tool,
- Fig. 7a: shows, by way of example, a wired communication link implemented via a data cable,
- Fig. 7b: shows, by way of example, a wired communication link implemented via a cable, which is also used for transferring electric power for the power tool.

### DETAILED DESCRIPTION

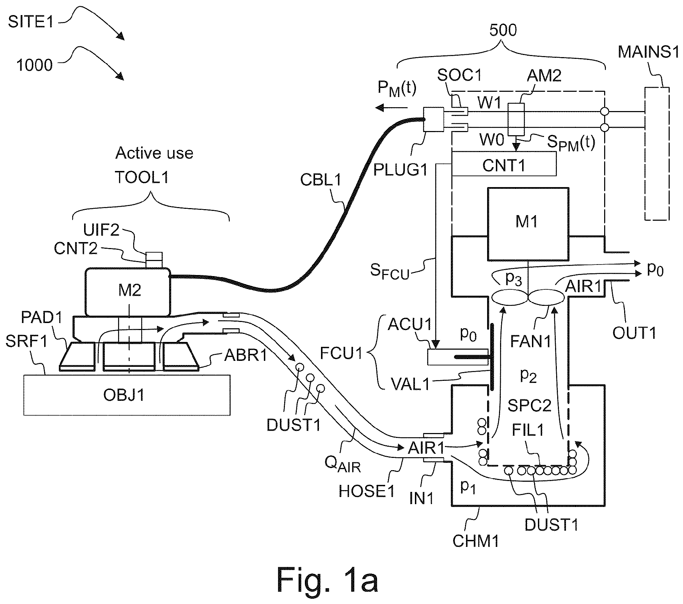

Referring to Fig. 1a, the apparatus 1000 comprises the dust extractor 500. The apparatus 1000 may further comprise the power tool TOOL1. Active processing of a workpiece OBJ1 with the power tool TOOL1 may generate dust particles DUST1. The dust particles DUST1 may be carried by an air flow AIR1 to the dust extractor 500 e.g. via a flexible hose HOSE1.

The dust extractor 500 and the power tool TOOL1 may be provided separately. The dust extractor 500 and the power tool TOOL1 may be connected to each other at a processing site SITE1.

The dust extractor 500 may be arranged to suck dust particles DUST1 carried by the suction air flow AIR1. The dust extractor 500 may also be called e.g. as a vacuum cleaner.

The dust extractor 500 may comprise a suction fan FAN1 to cause a partial vacuum (p₁), which in turn may draw an air flow AIR1 through the hose HOSE1 connected to the dust extractor 500. The fan FAN1 is arranged to cause an air flow rate Q_{AIR} through the hose HOSE1 and through the suction fan FAN1. The fan FAN1 may be e.g. an axial fan and/or a centrifugal fan. The dust extractor 500 may comprise a motor M1 for rotating the suction fan FAN1. The air flow AIR1 may be started by starting rotation of the fan FAN1. The air flow AIR1 may be stopped by stopping rotation of the fan FAN1.

The dust extractor 500 comprises a filter FIL1 to separate dust particles DUST1 from the air flow AIR1. The filter FIL1 may collect the separated dust particles DUST1. The suction fan FAN1 may draw the air flow AIR1 through the filter FIL1.

The apparatus 1000 may comprise a flexible hose HOSE1 connected to the dust extractor 500. The hose HOSE1 may convey an air flow AIR1 and dust particles DUST1 from the power tool TOOL1 to the dust extractor 500. The hose HOSE1 may convey an air flow AIR1 and dust particles DUST1 from a working area of a power tool TOOL1 to the dust extractor 500. The power tool TOOL1 may be e.g. a sander, a drilling machine, or an electric saw. Yet, the tool TOOL1 may be any electrically powered tool which needs dust extraction, and where the electric current drawn by the tool is related to an operating state of the tool.

The apparatus 1000 may be e.g. a surface processing apparatus. The power tool TOOL1 may be arranged to process a surface SRF1 of a workpiece OBJ1. The power tool TOOL1 may be e.g. a rotary sander, an orbital sander or a belt sander. The dust extractor 500 comprises an air inlet IN1 for the suction air flow AIR1. The dust extractor 500 may be arranged to draw the dust-laden air flow AIR1 via the hose HOSE1 to the inlet IN1. The hose HOSE1 may be detachably connectable to the inlet IN1.

The dust extractor 500 has an air outlet OUT1 for discharging the air flow AIR1 to the surroundings, after the dust particles DUST1 carried by the air flow AIR1 have been separated from the air flow AIR1.

p₀ denotes the ambient atmospheric pressure. Pressure near the power tool TOOL1 and at the air outlet OUT1 of the dust extractor 500 may be substantially equal to the atmospheric pressure p₀. The control system of the dust extractor 500 may also comprise a pressure sensor (PSEN0) for measuring the ambient pressure p₀ in real time. The ambient pressure p₀ is typically in the order of 100 kPa.

p₁ denotes an internal pressure of the inlet chamber CHM1 of the dust extractor 500. The pressure p₁ may also denote the upstream pressure of the filter FIL1. The pressure difference p₀ - p₁ may draw the dust-laded air flow AIR1 from the abrasive article ABR1 to the inlet chamber CHM1 of the dust extractor 500 via the hose HOSE1.

The rotating fan FAN1 may cause the partial vacuum p₂, which prevails between the filter FIL1 and the fan FAN1. p₂ denotes an upstream pressure of the fan FAN1 and downstream pressure of the filter FIL1. The pressure p₂ may be the lowest pressure of the apparatus 1000. p₃ denotes a downstream pressure of the fan FAN1.

The upstream pressure p₁ of the filter FIL1 may be e.g. in the range of 80 kPa to 90 kPa during normal dust extraction (after filter cleaning pulses have been completed). The upstream pressure p₂ of the fan FAN1 may be slightly lower than the pressure p₁ during the normal dust extraction. The ambient pressure p₀ may be approximately equal to 100 kPa.

The maximum pressure difference (p₀-p₂) between the ambient pressure p₀ and the upstream pressure p₂ of the fan FAN1 may be e.g. in the range of 5 to 30 kPa, e.g. in a situation where the air flow AIR1 via the hose HOSE1 is temporarily prevented. The air flow AIR1 may be temporarily prevented e.g. by blocking the hose. The maximum pressure difference (p₀-p₂) may be e.g. in the range of 25 to 27 kPa, e.g. in a situation where the HOSE1 is temporarily blocked.

The dust extractor 500 may comprise a dust chamber CHM1 for guiding the dust-laded air flow AIR1 from the inlet IN1 to the filter FIL1 and/or for collecting the separated dust DUST1. The dust extractor 500 may comprise an air flow chamber CHM1 for guiding the air flow AIR1 from the fan FAN1 to the air outlet OUT1.

The dust extractor 500 may comprise an electric outlet SOC1 connectable to a power tool TOOL1. An electric cable CBL1 and a connector PLUG1 of the power tool TOOL1 may be connected to the electric outlet SOC1 of the dust extractor 500.

The electric outlet SOC1 may be connectable to several different power tools TOOL1, which may have different electrical operating parameters. For example, a first power tool having a first idle current value may be connected to the outlet during a first time period, and a second power tool having a second different idle current value may be connected to the outlet during a second different time period.

The dust extractor 500 may comprise a current measuring unit AM2 to measure the electric current P_{M}(t) drawn via the outlet SOC1. The current measuring unit AM2 may form a current signal S_{PM}(t) indicative of the electric current P_{M}, which is drawn by the power tool TOOL1 from the outlet SOC1. The current measuring unit AM2 may form the current signal S_{PM}(t) e.g. by measuring one or more electric currents of the power tool TOOL1. The current measuring unit AM2 may form the current signal S_{PM}(t) e.g. by measuring RMS electric current of the power tool TOOL1. RMS means root mean square.

The control unit CNT1 may control operation of the dust extractor 500 by comparing the measured electric current P_{M} with one or more limit values LIM0, LIM1, LIM2.

The control unit CNT1 may control automatic filter cleaning based on the measured electric current P_{M}(t) of the power tool TOOL1. The control unit CNT1 may also control rotation of the suction fan FAN1 based on the measured electric current P_{M}(t) of the power tool TOOL1. Rotation of the fan FAN1 may consume electric power and may emit acoustic noise. Controlling rotation of the fan FAN1 may reduce consumption of electric power and/or may reduce acoustic noise.

Rotation of the suction fan FAN1 may be started when operation of the power tool TOOL1 is started. The control unit CNT1 may start rotation of the suction fan FAN1 e.g. when the current P_{M}(t) of the power tool TOOL1 exceeds the auto-start limit LIM1.

The control unit CNT1 may determine that the filter FIL1 is not clean e.g. if the current P_{M}(t) has exceeded the auto-clean limit LIM0, or e.g. if one or more sensor signals indicate that the filter FIL1 is not clean.

The control unit CNT1 may delay cleaning of the filter FIL1 when the current P_{M}(t) of the power tool TOOL1 exceeds the auto-clean limit LIM0. The control unit CNT1 may allow cleaning of the filter FIL1 in a delayed manner once the current P_{M}(t) no longer exceeds the auto-clean limit LIM0. The control unit CNT1 may start a filter cleaning operation AFC if the filter is not clean and if the current P_{M}(t) does not exceed the auto-clean limit LIM0 during a safety time period.

The control unit CNT1 may be arranged to begin a shutdown procedure e.g. when the current P_{M}(t) of the power tool TOOL1 falls to a value, which is smaller than or equal to the auto-stop limit LIM2.

In an embodiment, the control unit may determine that the filter needs to be cleaned, wherein the shutdown procedure may comprise e.g.
- waiting for a first safety time period,
- performing one or more filter cleaning operations,
- waiting for a second safety time period, and
- stopping rotation of the suction fan.

In an embodiment, the control unit may determine that the filter is clean, wherein the shutdown procedure may comprise e.g.
- waiting for the second safety time period, and
- stopping rotation of the suction fan.

The safety time period may also be called as hose purge delay. The safety time period allows loose dust DUST1 to be sucked away from the power tool TOOL1 and from the hose HOSE1 to the dust extractor 500, so that the risk of emitting said loose dust DUST1 to the environment may be reduced or avoided.

The control system SYS1 may comprise a motor driving unit MDU1 for driving the motor M1 according to a motor control signal S_{M1}. The motor driving unit MDU1 may provide one or more electric currents EC1 to the motor M1 according to the motor control signal S_{M1}. The control unit CNT1 may form the motor control signal S_{M1} for the motor driving unit MDU1. The motor driving unit MDU1 may e.g. start and stop rotation of the fan motor M1 according to the motor control signal S_{M1} received from the control unit CNT1.

The electrical system of the dust extractor 500 may receive electric operating power and electric current from a mains network MAINS1 via two or more nodes N1, N0. The electric power and current may be distributed from the nodes N1, N0 to the electric outlet SOC1 and to the motor driving unit MDU1. The electric power and current may be distributed from the nodes N1, N0 to the electric outlet SOC1 via conductors W1, WO.

The power tool TOOL1 comprises an electric motor M2 to cause relative motion of a processing element ABR1 with respect to a surface SRF1 of a workpiece OBJ1. The motor M2 may be powered by the electric current received from the outlet SOC1 via the cable CBL1. The cable CBL1 may comprise an electric connector PLUG1 connectable to the outlet SOC1 of the dust extractor 500. The motor M2 may be arranged to cause vibrational, rotational and/or linear motion of the processing element ABR1. The power tool TOOL1 may comprise a backing pad PAD1. The processing element ABR1 may be supported by the backing pad PAD1. The processing element ABR1 may be attached to the backing pad PAD1. The motor M2 may be arranged to cause vibrational and/or rotational motion of the backing pad PAD1. The motor M2 may be arranged to cause vibrational and/or rotational motion of the processing element ABR1 when the processing element ABR1 is attached to the backing pad PAD1.

The power tool TOOL1 may be e.g. a grinding device. The power tool TOOL1 may be e.g. an orbital sander or a rotating sander. The power tool TOOL1 may be e.g. an electric drill or an electric saw.

The power tool TOOL1 may be used for processing the workpiece OBJ1. The apparatus 1000 may be a processing apparatus. The power tool may be used for processing a surface SRF1 of the workpiece OBJ1. The apparatus 1000 may be a surface processing apparatus.

For example, the power tool TOOL1 may comprise an abrasive article ABR1, which comprises abrasive grains. The power tool TOOL1 may be e.g. a sander or a grinding device. The processing element ABR1 may be e.g. an abrading element, which comprises a plurality of abrasive grains. The power tool TOOL1 may comprise a supporting pad PAD1. The abrasive article ABR1 may be attached to the pad PAD1. The motor M2 may may be arranged to cause a movement of the abrasive article ABR1 with respect to the surface SRF1. The motor M2 may be arranged to cause rotary and/or oscillatory movement of the abrasive article ABR1 with respect to the surface SRF1. Pressing the abrasive article ABR1 against the surface SRF1 may generate dust particles DUST1, which may comprise particles released from the surface SRF1.

The power tool TOOL1 may comprise one or more openings OPE1 for extracting released dust particles DUST1 together with an air flow AIR1. The power tool TOOL1 may comprise one or more openings OPE1 for drawing the suction air flow AIR1. The power tool may comprise an outlet port PORT1 connectable to a hose HOSE1. The hose HOSE1 may have an input end IN0. Dust particles DUST1 carried by the air flow AIR1 may be sucked via the openings OPE1, via the outlet port PORT1, and via a hose HOSE1 to the dust extractor 500.

Active processing of a workpiece OBJ1 with the power tool TOOL1 may involve a risk of generating dust particles DUST1. The power tool TOOL1 may be e.g. a sander device, a grinding device, tile cutter, a milling machine, a router, a saw, a rotary saw, a bandsaw, an oscillating saw, a drill.

The power tool TOOL1 may comprise a user interface UIF2 for receiving user input and/or for providing information to the user. The power tool may comprise a control unit CNT2 for controlling operation of the power tool based on user input received via the user interface UIF2. For example, the control unit CNT2 may start rotation of the motor M2 when a user input is provided via the user interface UIF2 (e.g. by pressing a button). For example, the control unit CNT2 may stop rotation of the motor M2 when the user stops pressing the button of the user interface UIF2.

The motor M2 may draw a higher electric current during active processing, e.g. when the processing element ABR1 is pressed against the workpiece OBJ1. The dust extractor 500 may be arranged to prevent automatic filter cleaning AFC when the current P_{M}(t) is higher than the auto-clean limit LIM0. Consequently, the risk of emitting a dust plume during the filter cleaning may be reduced or avoided.

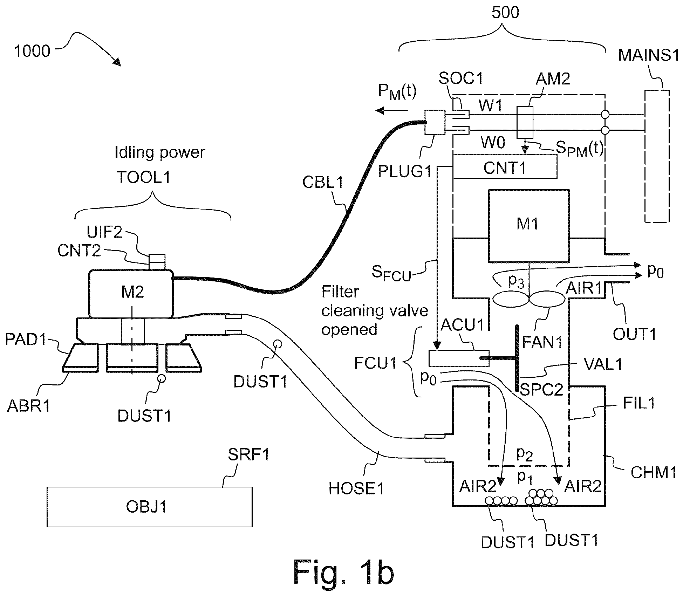

Referring to Fig. 1b, the power tool TOOL1 may be separated from the workpiece OBJ1 so that the processing element ABR1 is not in contact with the workpiece OBJ1 and the motor M2 is idling. Consequently, production of dust particles DUST1 may be stopped. The motor M2 may draw a smaller electric current when the processing element ABR1 is not in contact with the workpiece OBJ1 and the motor M2 is idling. The dust extractor 500 may be arranged to allow automatic filter cleaning AFC when the current P_{M}(t) is lower than an auto-clean limit LIM0. The apparatus 1000 may be arranged to enable automatic filter cleaning AFC when the current P_{M}(t) is lower than or equal to the auto-clean limit LIM0. The low electric current P_{M}(t) may be interpreted as an indication that the rate of generating dust particles DUST1 is low or zero.

For example, the power tool TOOL1 may be separated away from the workpiece OBJ1 so that the power tool TOOL1 does not generate any dust particles DUST1, wherein the power P_{M}(t) is substantially equal to the idle current P_{IDLE} of the power tool TOOL1.

For example, the power tool TOOL1 may be pressed with a small force against the workpiece OBJ1 so that dust particles DUST1 are generated only at a low rate, wherein the current P_{M}(t) may be lower than the auto-clean limit LIM0.

Dust particles DUST1 which have been deposited on the filter FIL1 may increase the flow resistance of the filter FIL1 and may reduce the suction power of the dust extractor 500. The suction power may be increased back to the normal value by removing the deposited dust particles DUST1 from the filter FIL1, by using automatic filter cleaning AFC.

The dust extractor 500 may comprise a filter cleaning unit FCU1 for performing the automatic filter cleaning AFC. The filter cleaning unit FCU1 may comprise e.g. an actuator ACU1 and a valve VAL1, which is operated by the actuator ACU1. The control unit CNT1 may send a control signal S_{FCU} to the filter cleaning unit FCU1 for enabling and/or disabling the automatic filter cleaning AFC. The control unit CNT1 may send a control signal S_{FCU} to the filter cleaning unit FCU1 for starting a filter cleaning operation. The filter cleaning unit FCU1 may be arranged to form one or more cleaning air pulses PU. The control signal S_{FCU} may be arranged to form a cleaning air pulse PU e.g. by causing the actuator ACU1 to momentarily open the valve VAL1, so that the pressure difference (p₁-p₂) across the filter FIL1 is temporarily reversed. The valve VAL1 may e.g. momentarily admit ambient air into the space SPC2 between the filter FIL1 and the suction fan FAN1, so that the pressure difference (p₁-p₂) across the filter FIL1 is temporarily reversed. The reversed pressure difference may cause a reversed air flow AIR2 across the filter FIL1. The reversed pressure difference may release dust particles DUST1 from the filter FIL1. In an embodiment, the released dust particles DUST1 may fall to the bottom of a dust collection chamber CHM1 e.g. by gravity.

The suction power may be temporarily decreased during a cleaning pulse PU. The air flow velocity in the hose HOSE1 may be temporarily decreased during a cleaning pulse PU. It may also take some time before the rotating suction fan FAN1 restores the pressure difference (p₁-p₂) back to the normal value after the valve VAL1 has been closed.

Operation of the dust extractor 500 may be controlled e.g. by applying one or more of the following principles.

The control unit CNT1 of the dust extractor 500 may be arranged to compare the current P_{M}(t) of the power tool TOOL1 with the auto-clean limit LIM0, and to control automatic cleaning AFC of the filter FIL1 based on a result of the comparison.

The control unit CNT1 of the dust extractor 500 may be arranged to enable automatic cleaning AFC of the filter FIL1 when the current P_{M}(t) of the power tool TOOL1 does not exceed the auto-clean limit LIM0.

The control unit CNT1 of the dust extractor 500 may be arranged to disable automatic cleaning AFC of the filter FIL1 when the current P_{M}(t) of the power tool TOOL1 is higher than the auto-clean limit LIM0.

The apparatus 1000 may have a first safety time period ΔT₁ for enabling automatic filter cleaning, wherein the control unit CNT1 may be arranged to start an automatic cleaning operation AFC of the filter FIL1 when the control unit CNT1 detects that the electric current P_{M} of the power tool TOOL1 has not been higher than the auto-clean limit LIM0 during the first safety time period ΔT₁.

Each filter cleaning operation AFC1 may comprise one or more filter cleaning pulses PU. A complete cleaning operation of the filter may comprise forming one or more cleaning air pulses. The number of cleaning pulses of a complete cleaning operation may be e.g. in the range of 1 to 10. The number N_{FULL} of filter cleaning pulses PU may be e.g. in the range of 1 to 10, e.g. equal to 3.

A complete filter cleaning operation AFC may consist of several cleaning pulses PU. The complete filter cleaning operation AFC may consist of e.g. N_{FULL} cleaning pulses PU. The symbol N_{FULL} may be called e.g. as the target number of cleaning pulses PU. A complete filter cleaning operation AFC may comprise forming a target number (N_{FULL}) of cleaning pulses PU. The target number N_{FULL} may be e.g. in the range of 2 to 10, in a situation where the complete filter cleaning operation AFC consists of several cleaning pulses PU.

It takes some time to form the several cleaning pulses, and the complete cleaning operation has a temporal duration. The control unit may be arranged to abort an on-going filter cleaning operation if the control unit detects that the current exceeds the auto-clean limit during the cleaning operation. Thus, the number of pulses of the aborted cleaning operation is smaller than the number of pulses of the complete cleaning operation.

The control unit CNT1 may be arranged to abort a filter cleaning operation AFC e.g. in a situation where the measured current P_{M}(t) exceeds the auto-clean limit LIM0 during the filter cleaning operation AFC. Consequently, the number of cleaning pulses (PU) of the aborted filter cleaning operation is smaller than said target number (N_{FULL}) of cleaning pulses PU.

The time period between consecutive pulses PU of a filter cleaning operation AFC1 may be e.g. in the range of 1 s to 5 s, e.g. equal to 1.5 s.

Forming of a single cleaning pulse PU may take e.g. 0.2 s to 1 s. Forming a single cleaning pulse PU may take e.g. 0.2 s. The time interval between the start times of consecutive cleaning pulses PU of a filter cleaning operation may be e.g. in the range of 1 s to 5 s. Performing a complete filter cleaning operation AFC having three pulses PU may take e.g. 0.2 s + 1 s + 0.2 s + 1 s + 0.2 s = 2.6 s, respectively

In an embodiment, the control system SYS1 may be arranged to set the number of cleaning pulses of a complete filter cleaning operation AFC, an interval between consecutive pulses PU of the filter cleaning operation AFC, and/or the interval between consecutive filter cleaning operations AFC based on user input. The user input may be received e.g. via a user interface UIF1 of the dust extractor 500, via a communication device PHO1 and/or via a user interface UIF2 of the power tool TOOL1.

The filter cleaning unit FCU1 may be arranged to perform filter cleaning operations AFC1, AFC2 repetitively e.g. in a situation where the power tool is idling during an extended time period. The filter cleaning unit FCU1 may be arranged to perform filter cleaning operations AFC1, AFC2 repetitively in a situation where the electric current P_{M} of the power tool TOOL1 remains between the auto-stop limit LIM2 and the auto-clean limit LIM0 during the extended time period.

The control unit CNT1 may continue rotation of the suction fan FAN1 after a filter cleaning operation AFC1, AFC2, if the power tool TOOL1 keeps idling after the filter cleaning operation AFC1, AFC2.

The filter cleaning unit FCU1 may be arranged to perform filter cleaning operations AFC1, AFC2 intermittently in a situation where the power tool TOOL1 keeps running during an extended time period, which comprises intermittent active operation periods. The control unit CNT1 may prevent filter cleaning operations AFC1, AFC2 when the current P_{M} exceeds the auto-clean limit LIM0. The control unit CNT1 may allow filter cleaning operations AFC1, AFC2 in a delayed manner when the current P_{M} remains below the auto-clean limit LIM0 at least during a first safety time period ΔT₁. The control unit CNT1 may be arranged to start automatic cleaning AFC of the filter FIL1 after the electric current is no longer higher than the auto-clean limit value LIM0.

The control unit CNT1 may delay automatic cleaning AFC of the filter FIL1 in a situation where the current signal S_{PM} indicates that the electric current P_{M} drawn by the power tool TOOL1 is higher than the auto-clean limit LIM0, wherein the control unit CNT1 may delay the automatic cleaning AFC at least until the current signal S_{PM} indicates that the electric current P_{M} is not higher than the auto-clean limit LIM0.

The control unit CNT1 of the dust extractor 500 may be arranged to compare the current P_{M}(t) of the power tool TOOL1 with the auto-start limit value LIM1 and/or with the auto-stop limit value LIM2, and to control rotation of the suction fan FAN1 based on a result of the comparison.

The control unit CNT1 of the dust extractor 500 may be arranged to start rotation of the suction fan FAN1 when the current P_{M}(t) exceeds the auto-start limit LIM1.

The control unit CNT1 may be arranged to control stopping rotation of the suction fan FAN1 by comparing the current P_{M}(t) with the auto-stop limit LIM2. If the current P_{M}(t) becomes smaller than or equal to the auto-stop limit LIM2, this may be interpreted as a command to stop rotation of the suction fan FAN1. The rotation of the suction fan FAN1 may be stopped in a delayed manner, in order to reduce or avoid the risk of emitting a dust plume. The control unit CNT1 of the dust extractor 500 may be arranged to start a shutdown procedure and a shutdown time period when the current P_{M}(t) falls to value, which is smaller than or equal to the auto-stop limit LIM2. The term "shutdown" may refer to the shutdown procedure and/or to the shutdown time period.

Stopping the rotation of the suction fan FAN1 may involve a risk of emitting dust to the environment. Rotation of the suction fan FAN1 should not be stopped if active operation of the power tool has not been stopped. The control unit CNT1 may perform one or more checks before stopping the rotation of the suction fan FAN1. For example, the control unit CNT1 may be arranged to apply a stricter criterion or a more relaxed criterion. According to a stricter criterion, the initiated shutdown is cancelled if the current P_{M}(t) exceeds the auto-stop limit LIM2 during the shutdown. According to a more relaxed criterion the initiated shutdown is cancelled if the current P_{M}(t) exceeds the auto-start limit LIM1 during the shutdown. Most of the following examples apply the stricter criterion, but it may also be possible to apply the more relaxed criterion.

The control unit CNT1 may start a filter cleaning operation AFC when the control unit CNT1 determines that the current P_{M}(t) has not exceeded the auto-clean limit LIM0 during a first safety time period ΔT₁. The length of the first safety time period ΔT₁ may be e.g. in the range of 1 s to 10 s, advantageously in the range of 2 s to 4 s, e.g. approximately 2 s. The first safety time period ΔT₁ allows purging the hose from loose dust DUST1 before the flow is disturbed by the filter cleaning pulses. The control system of the dust extractor may measure the pressure difference across the filter FIL1 after the filter cleaning operation AFC The control unit CNT1 may start an additional filter cleaning operation if the pressure difference across the filter FIL1 exceeds a predetermined limit. The control unit CNT1 may stop rotation of the suction fan FAN1 at the end of a second safety time period ΔT₂ if the current PM(t) has not exceeded the auto-stop limit LIM2 during the second safety time period ΔT₂ and if the control unit CNT1 determines that the filter is clean at the end of the second safety time period ΔT₂.

The auto-clean limit LIM0 may be greater than the auto-start limit LIM1. The auto-start limit LIM1 may be e.g. greater than an idle current P_{IDLE} of the power tool TOOL1. The auto-stop limit LIM2 may be smaller than or equal to the auto-start limit LIM1. The auto-start limit LIM1 may be slightly higher than the auto-stop limit LIM2 in order to provide hysteresis.

The control unit CNT1 may be arranged to control rotation of the fan FAN1 by comparing the measured electric current P_{M}(t) with an auto-start limit LIM1 and an auto-stop limit LIM2. The auto-stop limit LIM2 may be lower than the auto-clean limit LIM0. The auto-stop limit LIM2 may be lower than or equal to the auto-start limit LIM1. The control unit CNT1 may be arranged to stop rotation of the suction fan FAN1 at the end of a shutdown time period ΔT_{SHUT} e.g. if the filter FIL1 is determined to be clean and the measured electric current P_{M}(t) does not exceed the auto-stop limit LIM2 during the shutdown time period ΔT_{SHUT}.

The auto-start limit LIM1 may be equal to or higher than the auto-stop limit LIM2. The auto-start limit LIM1 may be slightly higher than the auto-stop limit LIM2 in order to provide hysteresis. The hysteresis may help to avoid unintentional starting of rotation of the fan in a situation where the signal S_{PM}(t) indicating the measured current P_{M}(t) has signal noise and the idle current of the power tool TOOL1 is close to the auto-stop limit LIM2. The auto-start limit LIM1 may be e.g. in the range of 101% to 150% of the auto-stop limit LIM2.

The filter cleaning unit FCU1 may also be arranged to perform filter cleaning operations (AFC1, AFC2) repetitively in a situation where the electric current P_{M}(t) of the power tool TOOL1 remains between an auto-stop limit LIM2 and the auto-clean limit LIM0 during an extended time period.

The electric current P_{M}(t) drawn by the power tool TOOL1 may be measured at a data acquisition rate. The data acquisition rate may be e.g. higher than 1 Hz, higher than 10 Hz, higher than 100 Hz or even higher than 1 kHz.

Cleaning of the filter may be delayed until the pressure difference over the filter is getting closed to a predetermined "filter clogged" limit, and/or if the measured air flow rate Q_{AIR} falls below the minimum allowed limit Q_{LIM}. The control unit CNT1 may be arranged to delay cleaning of the filter under normal circumstances, but the control unit CNT1 may override the delaying by starting forced cleaning if the measured air flow rate Q_{AIR} of the air flow AIR1 smaller than a minimum allowed limit Q_{LIM}. The dust extractor 500 may be e.g. certified for M-class or H-class operation, wherein it would be important to ensure that the air flow rate Q_{AIR} is higher than or equal to the minimum allowed limit Q_{LIM}. Ensuring at least the minimum air flow rate may be more important than reducing emission of dust during the cleaning pulses.

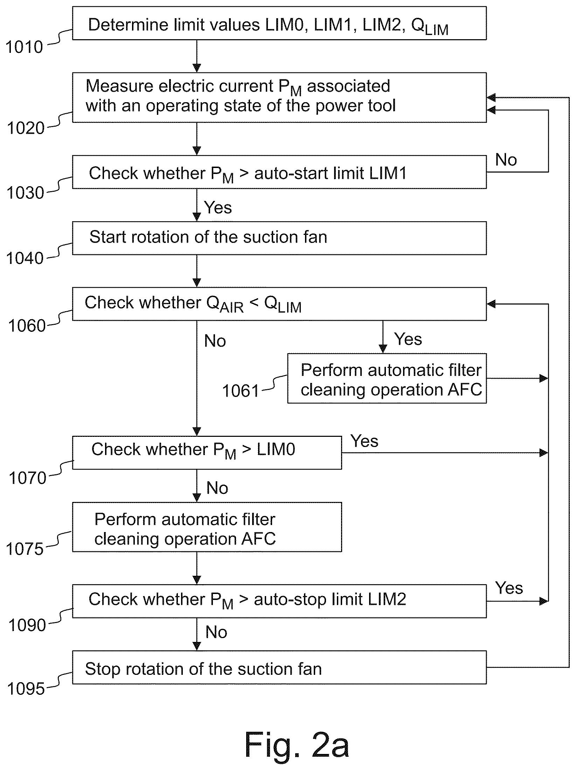

Fig. 2a shows, by way of example, method steps for controlling operation of the dust extractor 500.

An auto-clean limit LIM0, an auto-start limit LIM1, an auto-stop limit LIM2, and/or a minimum air flow limit Q_{LIM} may be determined in step 1010.

The limits LIM0, LIM1, LIM2, Q_{LIM} may be retrieved e.g. from a memory, or from a user interface. The memory may be e.g. a memory of the dust extractor 500, a memory of a mobile communication device PHO1, or a memory of the power tool TOOL1.

The electric current P_{M}(t) drawn by the power tool TOOL1 may be measured in step 1020. The electric current P_{M}(t) is associated with an operating state of the power tool TOOL1. The operating state of the power tool TOOL1 may be e.g. stopped state, idling, or active use. Measurement of the electric current P_{M}(t) may continue during the subsequent steps. The power tool TOOL1 may be used with varying current levels during the following method steps.

The suction fan FAN1 of the dust extractor 500 may be initially in the stopped state. The electric current P_{M}(t) may be compared with the auto-start limit LIM1 in step 1030. Rotation of the suction fan FAN1 may be controlled based on a result of the comparison. Rotation of the suction fan FAN1 may be started if the current P_{M}(t) exceeds the auto-start limit LIM1. Otherwise, the suction fan FAN1 may remain in the stopped state.

Rotation of the fan FAN1 may be started in step 1040 e.g. when the current P_{M}(t) exceeds the auto-start limit LIM1.

Rotation of the fan FAN1 may enable measurement of the air flow rate Q_{AIR} drawn via the suction fan FAN1. The measured air flow rate Q_{AIR} may be compared with the minimum limit Q_{LIM} in step 1060. The control unit CNT1 of the dust extractor 500 may start forced cleaning AFC of the filter FIL1 if the measured air flow rate Q_{AIR} is smaller than the minimum limit Q_{LIM}. The control unit CNT1 may override delaying of the cleaning if the measured air flow rate Q_{AIR} is too low. The dust extractor 500 may be arranged to perform one or more automatic cleaning operations AFC in step 1061. Checking (step 1060) and forced cleaning (step1061) may be performed one or more times.

The control unit CNT and the dust extractor 500 may continue normal operation if the measured air flow rate Q_{AIR} is greater than or equal to the minimum limit Q_{LIM} in step 1060.

The control unit CNT1 may check whether the measured electric current P_{M} exceeds the auto-clean limit LIM0 in step 1070. The control unit CNT1 may prevent or delay cleaning AFC of the filter FIL1 if the electric current P_{M} exceeds the auto-clean limit LIM0. The control unit CNT1 may prevent or delay cleaning AFC of the filter FIL1 if the current signal S_{PM} indicates that the measured electric current P_{M} exceeds the auto-clean limit LIM0. The method may comprise preventing or delaying cleaning AFC of the filter FIL1 if the current signal S_{PM} indicates that the measured electric current P_{M} exceeds the auto-clean limit LIM0. The method may return e.g. to step 1060 from step 1070 if P_{M}>LIM0.

The control unit CNT1 may allow cleaning AFC of the filter FIL1 if the measured electric current P_{M} does not exceed the auto-clean limit LIM0 in step 1070. The dust extractor 500 may perform one or more filter cleaning operations AFC in step 1075. A filter cleaning operation may comprise forming one or more cleaning air pulses PU.

The control unit CNT1 may check whether the measured electric current P_{M} exceeds the auto-stop limit LIM2 in step 1090. The control unit CNT1 and the dust extractor 500 may continue normal operation if the measured electric current P_{M} exceeds the auto-stop limit LIM2 in step 1090. The method may comprise continuing normal operation e.g. by returning to step 1060 from step 1090 if P_{M}>LIM2.

The control unit CNT1 may stop rotation of the suction fan FAN1 if the measured electric current P_{M} does not exceed the auto-stop limit LIM2 in step 1090. Rotation of the suction fan FAN1 may be stopped in step 1095. The method may return e.g. to step 1020 after rotation of the suction fan FAN1 has been stopped in step 1095.

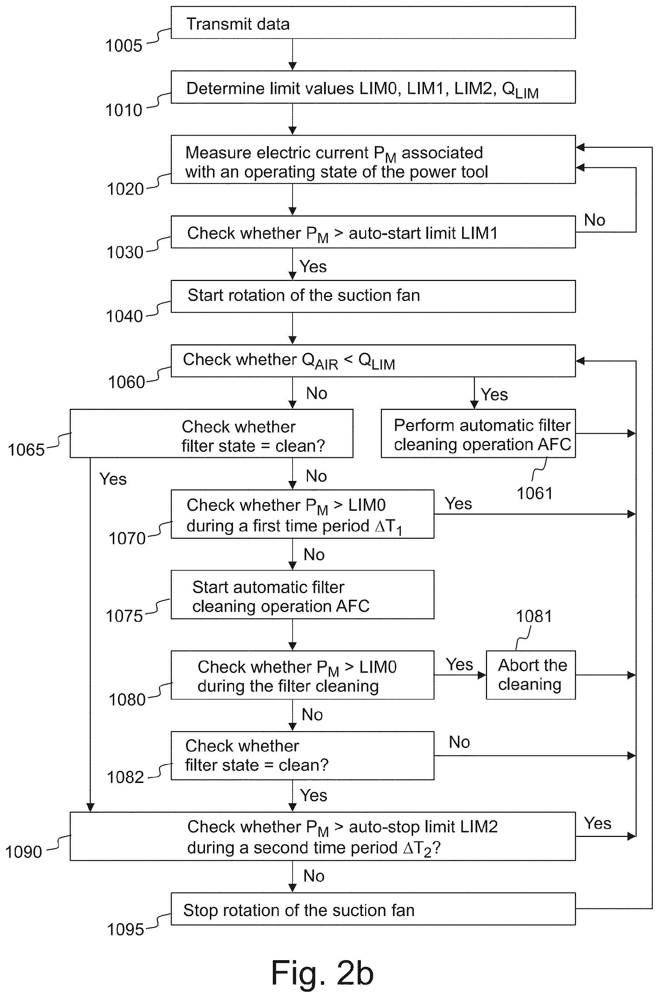

Referring to Fig. 2b, operation of the apparatus 1000 may optionally further comprise transmitting data, additional delays and/or additional checks.

The method may further comprise transmitting data to the dust extractor 500 via a communication link COM1. The data may comprise e.g. the auto-clean limit LIM0, the auto-start limit LIM1 and/or the auto-stop limit LIM2.

Data DATA2 may be transmitted in step 1005. The data DATA2 may be transmitted e.g. from the power tool TOOL1 and/or from a communication device PHO1. The control unit CNT1 of the dust extractor 500 may also receive the transmitted data DATA2 in step 1005. The transmitted data DATA2 may comprise information about the limits LIM0, LIM1, LIM2, and/or Q_{LIM}. The transmitted data DATA2 may specify the limits LIM0, LIM1, LIM2, and/or Q_{LIM}. The transmitted data DATA2 may comprise information, which enables determining the limits LIM0, LIM1, LIM2, and/or Q_{LIM}. The transmitted data DATA2 may comprise e.g. an identifier ID2 of the power tool TOOL1, wherein the limits LIM0, LIM1, LIM2, and/or Q_{LIM} may be retrieved from a memory based on the identifier ID2.

The limits LIM0, LIM1, LIM2, and/or Q_{LIM} may be determined in step 1010. The limits LIM0, LIM1, LIM2, Q_{LIM} may be determined e.g. based on the transmitted data DATA2 and/or by retrieving the limits LIM0, LIM1, LIM2, Q_{LIM} from a memory.

The electric current P_{M}(t) drawn by the power tool TOOL1 may be measured in step 1020.

The suction fan FAN1 of the dust extractor 500 may be initially in the stopped state. The electric current P_{M}(t) may be compared with the auto-start limit LIM1 in step 1030. Rotation of the suction fan FAN1 may be started if the current P_{M}(t) exceeds the auto-start limit LIM1. Otherwise, the suction fan FAN1 may remain in the stopped state.

Rotation of the fan FAN1 may be started in step 1040 when the current P_{M}(t) exceeds the auto-start limit LIM1.

The measured air flow rate Q_{AIR} may be compared with the minimum limit Q_{LIM} in step 1060. The control unit CNT1 of the dust extractor 500 may start forced cleaning AFC of the filter FIL1 if the measured air flow rate Q_{AIR} is smaller than the minimum limit Q_{LIM}. The dust extractor 500 may perform one or more automatic cleaning operations AFC in step 1061.

The control unit CNT1 may check a cleanliness state C_{F}(t) of the filter FIL1 in step 1065. The cleanliness state C_{F}(t) of the filter FIL1 may be e.g. clean (C_{F}(t)=1) or not clean (C_{F}(t)=0).

The control unit CNT1 may initiate a filter cleaning procedure if the control unit CNT1 determines that the filter FIL1 is not clean. The control unit CNT1 may abort the filter cleaning procedure any time if the measured electric current P_{M}(t) exceeds the auto-clean limit LIM0.

The control unit CNT1 may check whether the electric current P_{M}(t) exceeds the auto-clean limit LIM0 during a first safety time period ΔT₁ (step 1070). The purpose of the first safety time period ΔT₁ may be e.g. to ensure that the hose HOSE1 is purged to a sufficient degree before start of filter cleaning pulses PU. The control unit CNT1 may abort the filter cleaning procedure if the current P_{M}(t) exceeds the auto-clean limit LIM0 during the first safety time period ΔT₁. The control unit CNT1 may delay automatic filter cleaning AFC if the measured electric current P_{M}(t) even momentarily exceeds the auto-clean limit LIM0 during a first safety time period ΔT₁. The method may return e.g. to step 1060 if P_{M}(t) > LIM0.

The control unit CNT1 may enable filter cleaning operation AFC if the measured electric current P_{M}(t) remains smaller than or equal to the auto-clean limit LIM0 during the first safety time period ΔT₁. The control unit CNT1 may start a filter cleaning operation AFC in step 1075 if the current P_{M}(t) did not exceed the auto-clean limit LIM0 during the first safety time period ΔT₁. A filter cleaning operation may comprise forming one or more cleaning air pulses PU.

The electric current P_{M}(t) may be measured and compared continuously during the filter cleaning operation AFC. The control unit CNT1 may check whether the current P_{M}(t) exceeds the auto-clean limit LIM0 during the filter cleaning operation AFC in step 1080. The filter cleaning operation AFC may be aborted if the current P_{M}(t) exceeds the auto-clean limit LIM0 during the filter cleaning operation AFC. Otherwise, the dust extractor 500 may perform a complete filter cleaning operation AFC.

The control unit CNT1 may abort the filter cleaning operation AFC in step 1081 if the current P_{M}(t) exceeds the auto-clean limit LIM0 during the filter cleaning operation AFC. The control unit CNT1 may subsequently return e.g. to step 1060. Consequently, the dust extractor 500 may also perform an incomplete filter cleaning operation instead of a complete filter cleaning operation.

The state C_{F}(t) of the filter FIL1 may be checked again in step 1082. The method may return e.g. to step 1060 if the control unit CNT1 determines that the filter FIL1 is not clean in step 1082.

The method may continue to step 1090 if the control unit CNT1 determines in step 1982 that the filter FIL1 is clean.

Rotation of the fan FAN1 may be controlled based on comparison of the electric current P_{M}(t) with the auto-stop limit LIM2. The current P_{M}(t) may be compared with the auto-stop limit LIM2 in step 1090. The electric current P_{M}(t) may be measured and compared continuously during a second safety time period ΔT₂ (step 1090), after a complete filter cleaning operation AFC has been performed. The control unit CNT1 may check in step 1090 whether the measured electric current P_{M} exceeds the auto-stop limit LIM2 during a second safety time period ΔT₂. The control unit CNT1 and the dust extractor 500 may continue normal operation if the measured electric current P_{M} exceeds the auto-stop limit LIM2 in step 1090. Rotation of the suction fan FAN1 may be continued if the current P_{M}(t) even momentarily exceeds the auto-stop limit LIM2 during the second safety time period ΔT₂. The method may comprise continuing normal operation e.g. by returning to step 1060 from step 1090 if P_{M}>LIM2 during the second safety time period ΔT₂.

Rotation of the suction fan FAN1 may be stopped in step 1095 e.g. at the end of the second safety time period ΔT₂ if the current P_{M}(t) does not exceed the auto-stop limit LIM2 during the second safety time period ΔT₂. The control unit CNT1 may stop rotation of the suction fan FAN1 if the measured electric current P_{M} does not exceed the auto-stop limit LIM2 during the second safety time period ΔT₂. Rotation of the suction fan FAN1 may be stopped in step 1095. The method may return e.g. to step 1020 after rotation of the suction fan FAN1 has been stopped in step 1095.

The control unit CNT1 may be arranged to determine that the cleanliness state C_{F}(t) of the filter FIL1 is clean (C_{F}(t)=1) e.g. in a situation where the time from the last complete filter cleaning operation is shorter than a predetermined cleaning time period ΔT_{CLN}. The control unit CNT1 may be arranged to determine that the state C_{F}(t) of the filter FIL1 is not clean (i.e. dirty, C_{F}(t)=0) e.g. in a situation where the time from the last complete filter cleaning operation is longer than or equal to the predetermined cleaning time period ΔT_{CLN}, respectively.

The dust extractor 500 may also comprise one or more sensors for detecting the cleanliness state C_{F}(t) of the filter FIL1. The control system SYS1 of the dust extractor 500 may comprise e.g. one or more sensors for measuring a pressure resistance across the filter FIL1. The control system SYS1 may be arranged to determine the cleanliness state C_{F}(t) of the filter FIL1 e.g. based on the measured pressure resistance across the filter FIL1.

The control system SYS1 may be arranged to determine one or more limits LIM0, LIM1, LIM2 based on the identification of the connected power tool TOOL1.

The control system SYS1 may be arranged to determine one or more limits LIM0, LIM1, LIM2 e.g. by:
- retrieving one or more predetermined limits LIM0, LIM1, LIM2, Q_{LIM} from a memory of the dust extractor 500 based on an identification code ID2 of the power tool TOOL1,
- retrieving one or more predetermined limits LIM0, LIM1, LIM2, Q_{LIM} from a memory of a mobile communication device (PHO1) based on an identification code ID2 of the power tool TOOL1,
- retrieving one or more predetermined limits LIM0, LIM1, LIM2, Q_{LIM} from a memory of the power tool TOOL1, and by transmitting the one or more limits LIM0, LIM1, LIM2, Q_{LIM} to the dust extractor 500 via a communication link,
- measuring an idle current P_{IDLE} of the power tool TOOL1, and calculating one or more predetermined limits LIM0, LIM1, LIM2 from the measured idle current P_{IDLE}, and/or
- determining one or more limits LIM0, LIM1, LIM2, Q_{LIM} based on user input received via a user interface.

The limits LIM0, LIM1, LIM2 may be retrieved advantageously from a memory of the power tool TOOL1 and/or from a memory of the dust extractor 500.

The auto-clean limit LIM0 may be e.g. a predetermined value, which is retrieved from a memory (MEM2) of the dust extractor 500.

The control system SYS1 may be arranged to use default values as the limits LIM0, LIM1, LIM2 if a code of the power tool TOOL1 is not available to the control system. The control system SYS1 may be arranged to use the default values if the power tool TOOL1 is not recognized.

The control system SYS1 of the apparatus 1000 may be arranged to receive data (DATA2) from the power tool TOOL1 via a communication link (COM1), and the control system SYS1 may be arranged to determine the auto-clean limit LIM0 from the received data (DATA2). The data DATA2 may comprise e.g. one or more limit values LIM0, LIM1, LIM2. The data DATA2 may comprise e.g. a code ID2, which allows retrieving the one or more limit values LIM0, LIM1, LIM2 from a memory based on said code ID2.

The control system SYS1 may be arranged to determine the auto-clean limit LIM0 based on user input received via a user interface (UIF1, UIF2, PHO1).

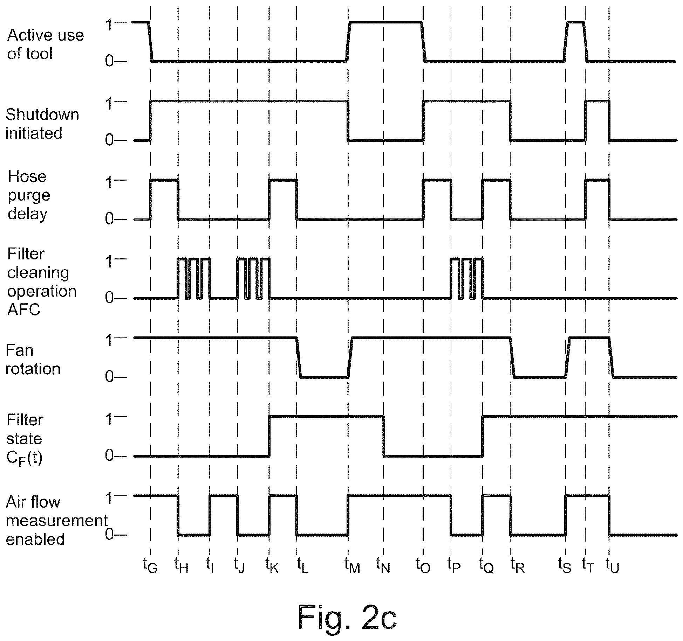

Fig. 2c shows, by way of example, timing of operation of the apparatus 1000. The uppermost curve shows operating state of the power tool TOOL1 (0 = the tool is in stopped state, 1 = the tool is used for active processing). The second curve from the top shows a shutdown state of the suction fan FAN1 (0 = shutdown process disabled, 1 = shutdown process enabled). The third curve from the top shows status of a safety time period (0 = no delay, 1 = delay). The fourth curve from the top shows status of filter cleaning pulses PU (0 = no cleaning pulse, 1 = cleaning pulse). The fifth curve from the top shows rotation state of the suction fan FAN1 (0 = fan stopped, 1 = fan rotating). The sixth curve from the top shows the state of the filter FIL1 (0 = not clean, 1 = clean). The lowermost curve shows the state of air flow rate Q_{AIR} measurement (0 = disabled, 1 = enabled). The symbols t_{G}, t_{H}, t_{I}, t_{J}, t_{K}, t_{L}, t_{M}, t_{N}, t_{O}, t_{P}, t_{Q}, t_{R}, t_{S}, t_{T}, t_{U} indicate time.

The control unit CNT1 may determine that there is a need to perform e.g. two consecutive filter cleaning operations for cleaning the filter after extended active use. A first filter cleaning operation AFC may comprise e.g. three pulses, and a second filter cleaning operation AFC may comprise e.g. three pulses.

The control unit CNT1 may determine that there is a need to perform e.g. only one filter cleaning operation after a shorter period of active use. The filter cleaning operation AFC may comprise e.g. three pulses.

The control unit CNT1 may determine that there is a need to perform a filter cleaning operation after a very short use of the power tool, if the filter is already clean.

Measurement of the air flow rate Q_{AIR} may be enabled e.g. when the suction fan FAN1 is rotating and the dust extractor 500 is not performing a filter cleaning operation AFC.

A user may stop active use of the power tool TOOL1 at the time t_{G}. The control unit CNT1 may initiate a shutdown procedure at the time t_{G} when the measured electric current P_{M}(t) is detected to fall below the auto-stop limit LIM2. The control unit CNT1 may determine that the filter FIL1 is not clean, and the control unit CNT1 may start a filter cleaning operation AFC at the time t_{H}, after a safety time period. The filter cleaning operation AFC may be completed at the time t_{I}. The control unit CNT1 may determine the cleanliness state C_{F}(t) of the filter FIL1 e.g. based on a pressure difference across the filter FIL1. The control unit CNT1 may determine at the time t_{J} that the filter FIL1 is not yet clean (C_{F}(t) =0), and the control unit CNT1 may start an additional filter cleaning operation AFC at the time t_{J}. The control unit CNT1 may determine that the filter FIL1 is clean (C_{F}(t)=1) at the time t_{K}. The control unit CNT1 may stop rotation of the suction fan FAN1 after a safety time period at the time t_{L}.

The user may start active use of the power tool TOOL1 at the time t_{M}. The control unit CNT1 may start rotation of the suction fan FAN1 when the measured electric current P_{M}(t) exceeds the auto-start LIM1 at the time t_{M}. Active use of the power tool TOOL1 may generate dust DUST1, which is collected on the filter FIL1. The control unit CNT1 may determine at the time t_{N} that the filter is not clean. The control unit CNT1 may determine the cleanliness state C_{F}(t) of the filter FIL1 e.g. based on a measured pressure difference across the filter FIL1 and/or based on the duration of active operation of the power tool TOOL1.

The user may stop active use of the power tool TOOL1 at the time to. The control unit CNT1 may initiate a shutdown procedure at the time to when the measured electric current P_{M}(t) is detected to fall below the auto-stop limit LIM2. The control unit CNT1 may determine that the filter FIL1 is not clean, and the control unit CNT1 may start a filter cleaning operation AFC at the time t_{P}, after a safety time period. The filter cleaning operation AFC may be completed at the time t_{Q}. The control unit CNT1 may determine that the filter FIL1 is clean at the time t_{Q}. The control unit CNT1 may stop rotation of the suction fan FAN1 after a safety time period at the time t_{R}.

The user may intentionally or accidentally start active use of the power tool TOOL1 at the time t_{S}. The control unit CNT1 may start rotation of the suction fan FAN1 when the measured electric current P_{M}(t) exceeds the auto-start LIM1 at the time t_{S}. The control unit CNT1 may determine that the filter FIL1 is still clean at the time t_{T}. Consequently, control unit CNT1 may determine that there is no need to perform a filter cleaning operation. The control unit CNT1 may stop rotation of the suction fan FAN1 after a safety time period at the time t_{U}.

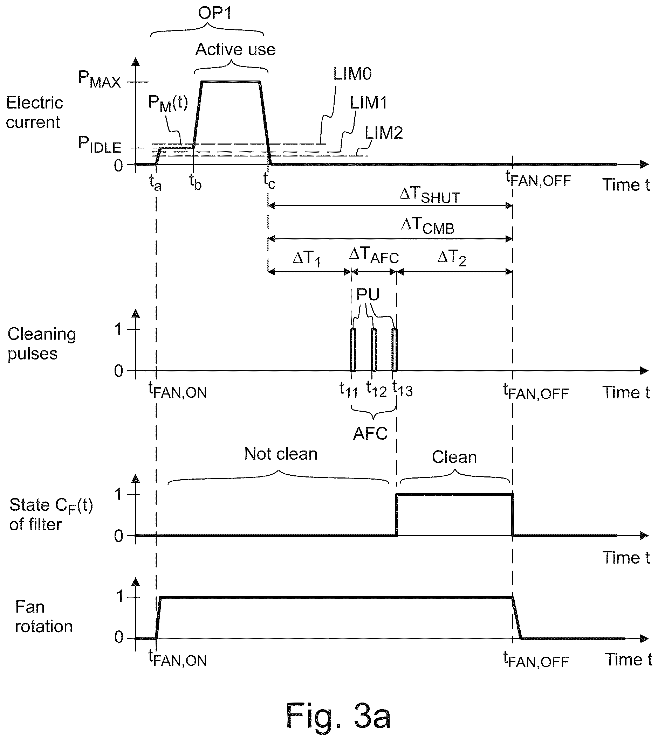

Fig. 3a shows, by way of example, operation of the dust extractor 500 during and after a processing operation OP1, where the power tool TOOL1 is idling before active processing, and where the motor M2 of the power tool TOOL1 is stopped immediately after the active processing. The processing operation OP1 may be e.g. a sanding operation, where an abrading element ABR1 is pressed against a workpiece OBJ1.

The uppermost curve of Fig. 3a shows, by way of example, temporal evolution of the electric current P_{M}(t) of the power tool TOOL1. The symbol P_{MAX} denotes a maximum value of the electric current P_{M}(t) of the power tool TOOL1.

The second curve from the top shows timing of cleaning pulses PU. The value 0 indicates that a cleaning pulse is not generated. The value 1 indicates that a cleaning pulse is generated.

The third curve from the top shows the cleanliness state C_{F}(t) of the filter FIL1. The value C_{F}(t) = 0 indicates that the filter FIL1 is not clean. The value C_{F}(t) = 1 indicates that the filter FIL1 is clean. The control unit CNT1 may determine that the filter FIL1 is clean e.g. if the time since performing the last complete filter cleaning operation is less than a filter cleaning interval (ΔT_{CLN}), and/or if signals from one or more sensors indicate that the filter FIL1 is clean.

The lowermost curve shows the rotation state of the suction fan FAN1. The value 1 indicates that the fan is rotating, and the value 0 indicates that the fan is stopped.

The processing operation OP1 may be started e.g. by starting rotation of the motor M2 of the power tool TOOL1 at a time tₐ. Active processing may begin immediately when the rotation of the motor M2 begins, or active processing may be preceded with an idling period, where the power tool TOOL1 draws an idle current P_{IDLE}.

In both cases, the electric current P_{M}(t) may exceed the auto-start limit LIM1 at the time tₐ. The control unit CNT1 of the dust extractor 500 may determine that the current P_{M}(t) exceeds the auto-start limit LIM1, and the control unit CNT1 may start rotation of the suction fan FAN1 at the time t_{FAN,ON}. The time t_{FAN,ON} for starting the rotation may substantially coincide with the time (tₐ) when the current P_{M}(t) is detected to exceed the auto-start limit LIM1.

In this example, active processing with the power tool TOOL1 may be started at the time t_{b}, e.g. by pressing the processing element ABR1 against the workpiece OBJ1. Rotation of the motor M2 of the power tool TOOL1 may be stopped at the time t_{c}. The control unit CNT1 may determine that the current P_{M}(t) exceeds the auto-clean limit LIM0 during the time period from t_{b} to t_{c}, and the control unit CNT1 may delay automatic filter cleaning AFC at least during the time period from t_{b} to t_{c}.

A shutdown procedure may be started e.g. when the control unit CNT1 detects that the current P_{M}(t) is lower than or equal to the auto-stop limit LIM2. The electric current P_{M}(t) may become lower than the auto-stop limit LIM2 at the time t_{c}. A shutdown time period ΔT_{SHUT} may be started e.g. when the electric current P_{M}(t) is detected to become lower than the auto-stop limit LIM2.

The control unit CNT1 may be arranged to perform one or more filter cleaning operations AFC during the shutdown time period ΔT_{SHUT}. The shutdown time period ΔT_{SHUT} may comprise e.g. a first safety time period ΔT₁, the duration ΔT_{AFC} of a complete filter cleaning operation AFC, and a second safety time period ΔT₂.

The control unit CNT1 may check whether the current P_{M}(t) remains lower than or equal to the auto-clean limit LIM0 during a first safety time period ΔT₁. The control unit CNT1 may start automatic filter cleaning AFC at the end of the first safety time period ΔT₁ if the current P_{M}(t) does not exceed the auto-clean limit LIM0 during the first safety time period ΔT₁. Otherwise, the automatic filter cleaning AFC may be cancelled.

The automatic filter cleaning AFC may comprise forming one or more cleaning pulses PU, e.g. at times t₁₁, t₁₂, t₁₃. A complete filter cleaning operation AFC may be performed if the current P_{M}(t) does not exceed the auto-clean limit LIM0 during the filter cleaning operation AFC. Otherwise, the filter cleaning operation AFC may be aborted, and also the shutdown may be cancelled.

The control unit CNT1 may be arranged to a start a shutdown procedure for stopping rotation of the suction fan FAN1 when the current P_{M}(t) falls to a value, which is smaller than or equal to the auto-stop limit LIM2. The control unit CNT1 may be arranged to stop rotation of the fan FAN1 at the end of the shutdown procedure e.g. if a complete filter cleaning operation AFC has been performed, and if the current P_{M}(t) has not exceeded the limit LIM2 (or LIM1) during the shutdown procedure.

The control unit CNT1 may check whether the current P_{M}(t) remains lower than or equal to the auto-stop limit LIM2 during the shutdown procedure. The shutdown may be cancelled e.g. if the current P_{M}(t) exceeds the limit LIM2 (or LIM1) after the shutdown has been started. The shutdown may be cancelled if the current P_{M}(t) exceeds the limit LIM2 (or LIM1) during any of the time periods ΔT₁, ΔT_{AFC}, ΔT₂. The control unit CNT1 may stop rotation of the suction fan FAN1 at the end of the second safety time period ΔT₂, if the shutdown is not cancelled. Rotation of the suction fan FAN1 may be stopped at the time t_{FAN,OFF}.

The second safety time period ΔT₂ may start at the end of a completed filter cleaning operation AFC. The second safety time period ΔT₂ may be e.g. in the range of 1 to 30 s. The control unit CNT1 may stop rotation of the suction fan FAN1 at the end of the second safety time period ΔT₂ provided that the shutdown is not cancelled.

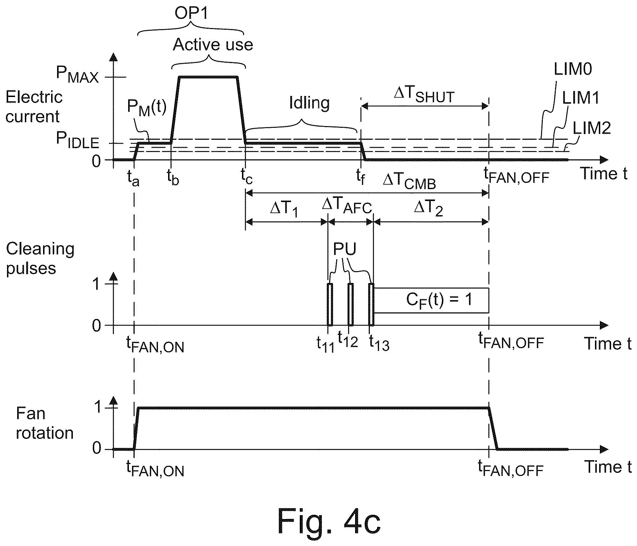

The symbol ΔT_{CMB} may denote a combined time period, which consists of the first safety time period ΔT₁, the duration ΔT_{AFC} of the complete filter cleaning operation AFC, and the second safety time period ΔT₂. In this example, the length of the shutdown time period ΔT_{SHUT} is equal to the length of the combined time period ΔT_{CMB}. However, the shutdown time period ΔT_{SHUT} may also be shorter than the combined time period ΔT_{CMB} (Fig. 4c).

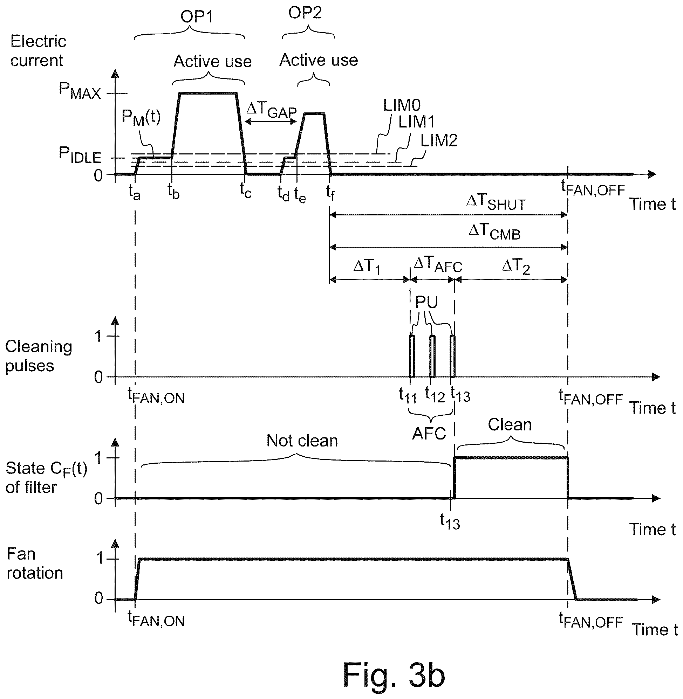

Fig. 3b shows, by way of example, operation of the dust extractor 500 during and after two consecutive processing operations OP1, OP2, where the time interval between the processing operations OP1, OP2 is so short that the dust extractor 500 does not have time to start automatic filter cleaning AFC between the processing operations OP1, OP2.

The motor M2 of the power tool TOOL1 starts idling at the time tₐ. The current P_{M}(t) exceeds the auto-start limit LIM1 at the time tₐ. Rotation of the suction fan FAN1 may be started at the time tₐ when the current P_{M}(t) exceeds the auto-start limit LIM1. Rotation of the suction fan FAN1 is started at the time t_{FAN,ON}.

Active processing is started at the time t_{b}. Active processing of the first processing operation OP1 is stopped at the time t_{c}. The rotation of the motor M2 is also stopped at the time t_{c}.

The motor M2 of the power tool TOOL1 starts idling again at the time t_{d}. Active processing is started at the time tₑ. Active processing of the second processing operation OP2 is stopped at the time t_{f}. The rotation of the motor M2 is also stopped at the time t_{f}.

The symbol ΔT_{GAP} denotes a time interval between the times t_{c} and tₑ, i.e. the time interval between active processing of the first processing operation OP1 and the active processing of the second processing operation OP2.

The time interval between ΔT_{GAP} between the active processing operations may be shorter than the safety time period ΔT₁. Consequently, the control unit CNT1 does not have time to start the automatic filter cleaning AFC before the start of the active processing at the time tₑ. The control unit CNT1 does not start automatic filter cleaning AFC1 during the time interval ΔT_{GAP} if the time interval ΔT_{GAP} is shorter than the first safety time period ΔT₁. The control unit CNT1 may delay automatic filter cleaning AFC even further when the control unit CNT1 detects that the electric current exceeds the auto-clean limit LIM0 at the time tₑ.

The control unit CNT1 may start a first shutdown procedure when the current P_{M}(t) falls below the auto-stop limit LIM2 at the time t_{c}, but the first shutdown may be cancelled when the current P_{M}(t) exceeds the auto-stop limit LIM2 at the time t_{d}. Consequently, the first shutdown may be cancelled. Furthermore, the automatic filter cleaning is delayed when the current P_{M}(t) exceeds the auto-clean limit LIM0 at the time tₑ.

A second shutdown procedure may be started when the current P_{M}(t) falls below the auto-stop limit LIM2 at the time t_{f}. The current P_{M}(t) may remain smaller than or equal to the auto-stop limit LIM2 so that a complete cleaning operation AFC is performed after a first safety time period ΔT₁, and so that rotation of the suction fan FAN1 is stopped at the end of the second safety time period ΔT₂.

Automatic filter cleaning may be enabled when the current P_{M}(t) falls below the auto-clean limit LIM0 at the time t_{f}. The control unit CNT1 may enable automatic filter cleaning AFC in a delayed manner if the current P_{M}(t) does not exceed the auto-clean limit LIM0 during the first safety time period ΔT₁. The control unit CNT1 may start automatic filter cleaning AFC at the end of the first safety time period ΔT₁, provided that the current P_{M}(t) does not exceed the auto-clean limit LIM0 during the first safety time period ΔT₁. Otherwise, the automatic filter cleaning may be disabled. A complete filter cleaning operation AFC may be performed if the current P_{M}(t) does not exceed the auto-clean limit LIM0 during the filter cleaning operation AFC. Otherwise, the filter cleaning operation AFC1 may be aborted.

The shutdown time period ΔT_{SHUT} may comprise the first safety time period ΔT₁, a complete filter cleaning operation AFC, and the second safety time period ΔT₂. The second safety time period ΔT₂ may begin after the complete filter cleaning operation AFC1 has been performed. The control unit CNt1 may stop rotation of the fan FAN1 at the end of the shutdown time period ΔT_{SHUT}. Rotation of the suction fan FAN1 may be stopped at the end of the second safety time period ΔT₂ if the started shutdown is not cancelled before the end of the second safety time period ΔT₂. Rotation of the suction fan FAN1 may be stopped at the time t_{FAN,OFF}. The shutdown may be cancelled e.g. if the current P_{M}(t) exceeds the limit LIM2 (or LIM1) during the shutdown time period ΔT_{SHUT}.

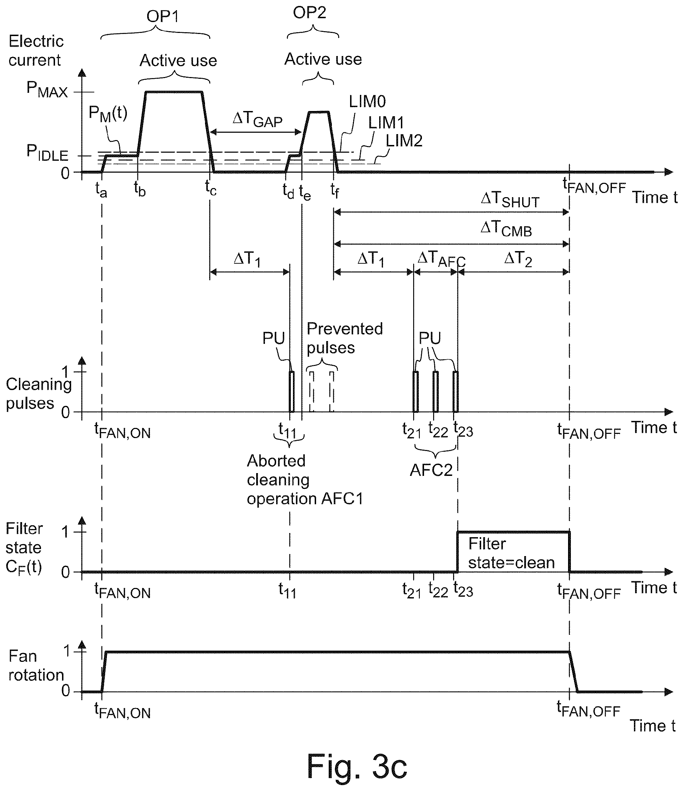

Fig. 3c shows, by way of example, operation of the dust extractor 500 during and after two consecutive processing operations OP1, OP2, where the time interval ΔT_{GAP} between the processing operations OP1, OP2 is so short that a first filter cleaning operation AFC1 is aborted when active processing of the second processing operation OP2 starts.

Automatic filter cleaning may be enabled when the current P_{M}(t) falls below the auto-clean limit LIM0 at the time t_{c}. A first safety time period ΔT₁ may be started at the time t_{c}. The control unit CNT1 may start the first filter cleaning operation AFC1 at the time t₁₁ when the control unit CNT1 determines that the current P_{M}(t) has not exceeded the auto-clean limit LIM0 during a first safety time period ΔT₁. In this example, a complete filter cleaning operation AFC1 may comprise more than one cleaning pulse PU. The user may start active use of the power tool TOOL1 during the first filter cleaning operation AFC1. The control unit CNT1 may abort the first filter cleaning operation AFC1 at the time tₑ when the control unit CNT1 determines that the current P_{M}(t) exceeds the auto-clean limit LIM0 during the first filter cleaning operation AFC1. The first filter cleaning operation AFC1 is aborted before the first filter cleaning operation AFC1 has been completed.

Automatic filter cleaning may be enabled again when the current P_{M}(t) falls below the auto-clean limit LIM0 at the time t_{f}. The control unit CNT1 may start automatic filter cleaning AFC2 at the end of the first safety time period ΔT₁, provided that the current P_{M}(t) does not exceed the auto-clean limit LIM0 during the first safety time period ΔT₁. Otherwise, the automatic filter cleaning may be disabled or delayed again.

A second complete filter cleaning operation AFC2 may be performed, provided that the current P_{M}(t) does not exceed the auto-clean limit LIM0 during the second filter cleaning operation AFC2. The complete filter cleaning operation AFC2 may comprise forming cleaning pulses PU at times t₂₁, t₂₂, t₂₃.

The control unit CNT1 may start a shutdown when the current P_{M}(t) falls below the auto-stop limit LIM2 at the time t_{f}. The shutdown time period ΔT_{SHUT} may comprise a first safety time period ΔT₁, a time period ΔT_{AFC} for complete filter cleaning operation, and a second safety time period ΔT₂.

The control unit CNT1 may stop rotation of the suction fan FAN1 at the end of the second safety time period ΔT₂ e.g. if the current P_{M}(t) has not exceeded the auto-stop limit LIM2 during the shutdown time period ΔT_{SHUT}, and if the control unit CNT1 determines that filter FIL1 is clean at the end of the second safety time period ΔT₂. Rotation of the suction fan FAN1 may be stopped at the time t_{FAN,OFF}.

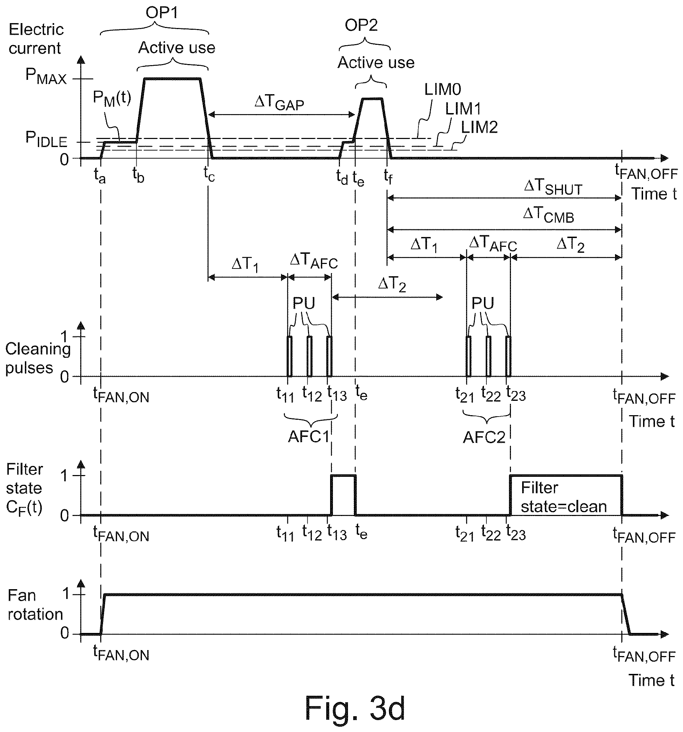

Fig. 3d shows, by way of example, operation of the dust extractor 500 during and after two consecutive processing operations OP1, OP2, where the time interval ΔT_{GAP} between the processing operations OP1, OP2 is so long that a complete filter cleaning operation AFC1 can be performed between the processing operations OP1, OP2.

The control unit CNT1 may start the first filter cleaning operation AFC1 at the time t₁₁ when the control unit CNT1 determines that the filter FIL1 is not clean and that the current P_{M}(t) has not exceeded the auto-clean limit LIM0 during a first safety time period ΔT₁. A second safety time period ΔT₂ may start at the end of the completed filter cleaning operation AFC1.

The control unit CNT1 may start a shutdown when the current P_{M}(t) falls below the auto-stop limit LIM2 at the time t_{c}, but the control unit CNT1 may cancel the shutdown when the current P_{M}(t) exceeds the auto auto-stop limit LIM2 during the second safety time period ΔT₂ at the time t_{d}.

The control unit CNT1 may determine that the filter FIL1 is clean at the end of the first cleaning operation AFC1. The control unit CNT1 may determine that the filter FIL1 is not clean anymore when the active operation of the power tool TOOL1 starts again at the time tₑ.

The control unit CNT1 may start a second shutdown when the current P_{M}(t) falls below the auto-stop limit LIM2 at the time t_{f}. The shutdown time period ΔT_{SHUT} may comprise a first safety time period ΔT₁, a time period ΔT_{AFC} for complete filter cleaning operation AFC2, and a second safety time period ΔT₂.

The control unit CNT1 may stop rotation of the suction fan FAN1 at the end of the second safety time period ΔT₂ e.g. if the current P_{M}(t) has not exceeded the auto-stop limit LIM2 (or the limit LIM1) during the shutdown time period ΔT_{SHUT}, and if the control unit CNT1 determines that filter FIL1 is clean at the end of the second safety time period ΔT₂. Rotation of the suction fan FAN1 may be stopped at the time t_{FAN,OFF}.

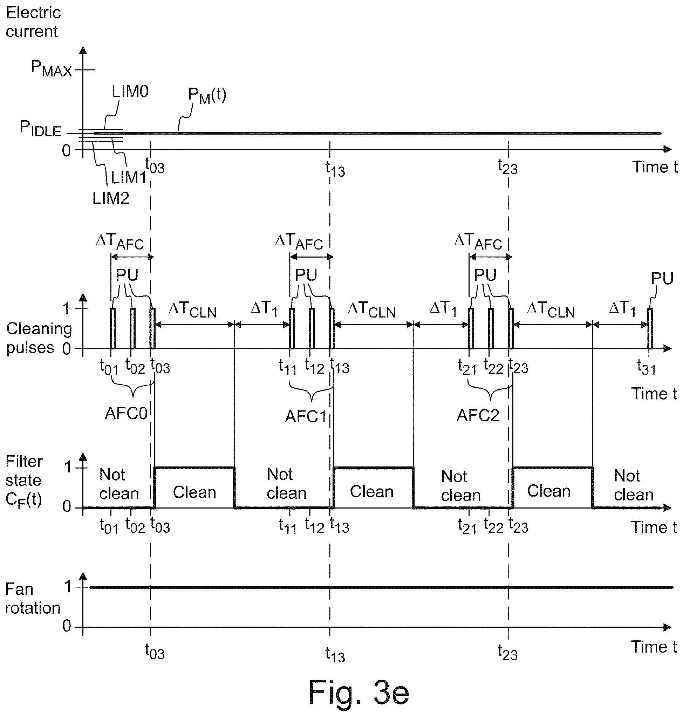

Fig. 3e shows, by way of example, repetitive filter cleaning operations AFC0, AFC1, AFC2. The dust extractor 500 may start performing automatic filter cleaning AFC repetitively if the power tool TOOL1 operates at the idle current level P_{IDLE} during an extended time period. The filter cleaning operations AFC may be performed repetitively e.g. in a situation where the power tool TOOL1 is idling during an extended time period, e.g. longer than 20 s. The filter cleaning unit FCU1 may be arranged to perform filter cleaning operations AFC0, AFC1, AFC2 repetitively e.g. in a situation where the current P_{M}(t) remains between the auto-stop limit LIM2 and the auto-clean limit LIM0 during a time period, which is longer than or equal to 20 s.

The dust extractor 500 may be arranged to perform filter cleaning operations AFC repetitively so that there is a cleaning time interval ΔT_{CLN} between consecutive cleaning operations AFC. The cleaning time interval ΔT_{CLN} may e.g. in the range of 5 s to 600 s, advantageously in the range of 10 s to 60 s. The cleaning time interval ΔT_{CLN} may have e.g. a predetermined duration. The cleaning time interval ΔT_{CLN} may be retrieved e.g. from a memory of the dust extractor. In an embodiment, the cleaning time interval ΔT_{CLN} may also be selected by a user by using a user interface of the dust extractor 500. The cleaning time interval ΔT_{CLN} may be user-selectable and/or may have a default value.

A filter cleaning operation AFC0 may comprise pulses PU at times t₀₁, t₀₂, t₀₃. A filter cleaning operation AFC1 may comprise pulses PU at times t₁₁, t₁₂, t₁₃. A filter cleaning operation AFC2 may comprise pulses PU at times t₂₁, t₂₂, t₂₃. A filter cleaning operation may also be started at a time t₃₁.

The time ΔT_{AFC} of a complete automatic filter cleaning operation AFC may be e.g. approximately 3 s, and the cleaning time interval ΔT_{CLN} may be e.g. approximately 15 s. Consequently, the next filter cleaning operation AFC2 may be started e.g. 18 s after start of the previous filter cleaning operation AFC1, provided that the electric current P_{M}(t) remains between the limits LIM2 and LIM0 after the start of the previous filter cleaning operation AFC1.

The filter cleaning operations AFC may be repeated e.g. until one or more sensor signals indicate that the filter is clean.

In an embodiment, the control unit CNT1 does not need to determine a need for cleaning the filter FIL1 based on one or more sensor signals. The filter FIL1 may be assumed to be clean after a complete filter cleaning operation AFC, wherein the filter FIL1 may be assumed to become dirty at the end of the cleaning time interval ΔT_{CLN}, in a situation where the power tool TOOL1 is idling. The dust extractor 500 may be arranged to perform filter cleaning operations repetitively according to the cleaning time interval ΔT_{CLN}, provided that the current P_{M}(t) does not exceed the auto-clean limit LIM0. In that embodiment, the cleaning time interval ΔT_{CLN} may also be understood to represent a default duration for which the filter remains clean after the cleaning operation, provided that the power tool TOOL1 is idling.

The control unit CNT1 may determine that the filter FIL1 is clean at the end of a complete filter cleaning operation AFC0. The cleaning time interval ΔT_{CLN} may start at the end of the complete filter cleaning operation AFC0. The control unit CNT1 may determine that the filter FIL1 is not clean anymore at the end of the cleaning time interval ΔT_{CLN}. The control unit CNT1 may start the next filter cleaning operation AFC1 at the end of the cleaning time interval ΔT_{CLN} if the current P_{M}(t) has not exceeded the auto-clean limit LIM0 during the cleaning time interval ΔT_{CLN}.

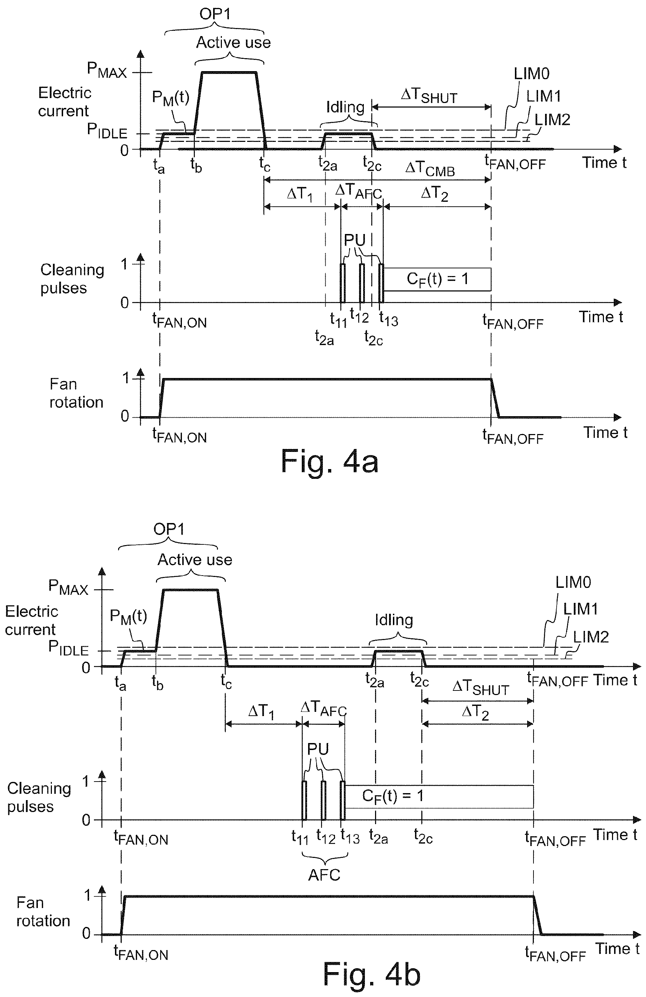

Fig. 4a shows, by way of example, operation of the dust extractor 500 in a situation where the power tool TOOL1 has been stopped after active use, but then started for a short idling period. The power tool TOOL1 has been stopped after active use at the time t_{c}. The power tool TOOL1 is started again and idling during a time period from t₂ₐ to t_{2c}, after being in the stopped state. The current P_{M}(t) is temporarily increased from zero to the idle level P_{IDLE} at the time t₂ₐ.

The control unit CNT1 may start a first shutdown when the current P_{M}(t) falls below the auto-stop limit LIM2 at the time t_{c}. The control unit CNT1 may cancel the first shutdown when the current P_{M}(t) exceeds the auto-stop LIM2 at the time t₂ₐ. The start of the idling may cancel the shutdown.

A first safety time period ΔT₁ for the automatic filter cleaning may start at the time t_{c}. The current P_{M}(t) remains smaller than the auto-clean limit LIM0 during the first safety time period ΔT₁. The control unit CNT1 may start the filter cleaning operation at the time t₁₁ when the control unit CNT1 determines that the current P_{M}(t) has not exceeded the auto-clean limit LIM0 during a first safety time period ΔT₁, and when the control unit CNT1 determines that the filter FIL1 is not clean.

The control unit CNT1 may start a shutdown again when the current P_{M}(t) falls below the auto-stop limit LIM2 at the time t_{2c}. The control unit CNT1 may start a shutdown time period ΔT_{SHUT} when the current P_{M}(t) falls below the auto-stop limit LIM2 at the time t_{2c}. A second safety time period ΔT₂ for stopping rotation of the fan FAN1 may be started when the complete filter cleaning operation AFC has been performed. The control unit CNT1 may stop rotation of the fan FAN1 at the end of the second safety time period ΔT₂ when the control unit CNT1 determines that the current P_{M}(t) has not exceeded the auto-stop limit LIM2 during the second safety time period ΔT₂, and when the control unit CNT1 determines that the filter FIL1 is clean. The control unit CNT1 may determine that the filter FIL1 is clean e.g. based on a measured pressure difference over the filter FIL1, or by assuming that the filter FIL1 is clean after the complete filter cleaning operation.

The control unit CNT1 may stop rotation of the suction fan FAN1 at the end of the shutdown time period ΔT_{SHUT} provided that the e.g. the following conditions are fulfilled:
- the shutdown time period ΔT_{SHUT} is started when the current P_{M}(t) becomes smaller than or equal to the auto-stop limit LIM2,
- the current P_{M}(t) does not exceed the auto-stop limit LIM2 (or the limit LIM1) during the shutdown time period ΔT_{SHUT},
- the shutdown time period ΔT_{SHUT} is longer than or equal to the second safety time period ΔT₂,
- the control unit CNT1 determines that the filter FIL1 is clean at the end of the shutdown time period ΔT_{SHUT}.

Fig. 4b shows, by way of example, operation of the dust extractor 500 in a situation where the power tool TOOL1 has been stopped after active use, but then started for a short idling period.

The control unit CNT1 may start a first shutdown when the current P_{M}(t) falls below the auto-stop limit LIM2 at the time t_{c}. A filter cleaning operation AFC may be performed when the current P_{M}(t) has not exceeded the auto-clean limit LIM0 during the first safety time period ΔT₁. The control unit CNT1 may determine that the filter FIL1 is clean after the filter cleaning operation AFC. The control unit CNT1 may cancel the first shutdown when the current P_{M}(t) exceeds the auto-stop LIM2 at the time t₂ₐ. The start of the idling may cancel the shutdown.

The control unit CNT1 may start a second shutdown when the current P_{M}(t) falls below the auto-stop limit LIM2 at the time t_{2c}. A shutdown time period ΔT_{SHUT} may be started at the time t_{2c} when the current P_{M}(t) falls below the auto-stop limit LIM2. A second safety time period ΔT₂ for stopping rotation of the fan FAN1 may be started at the time t_{2c} when the current P_{M}(t) falls below the auto-stop limit LIM2. The control unit CNT1 may stop rotation of the fan FAN1 at the end of the second safety time period ΔT₂ when the control unit CNT1 determines that the current P_{M}(t) has not exceeded the auto-stop limit LIM2 during the second safety time period ΔT₂, and when the control unit CNT1 determines that the filter FIL1 is clean. The control unit CNT1 may determine that the filter FIL1 is clean e.g. based on a measured pressure difference over the filter FIL1, or by assuming that the filter FIL1 is clean after the complete filter cleaning operation.

Fig. 4c shows, by way of example, operation of the dust extractor 500 in a situation where the current P_{M}(t) remains at the idle level P_{IDLE} for some time after active processing.

The current P_{M}(t) may fall below the auto-clean limit LIM0 at the time t_{c}. A first safety time period ΔT₁ for the automatic filter cleaning may start at the time t_{c}. The control unit CNT1 may start a filter cleaning operation at the time t₁₁ when the control unit CNT1 determines that the current P_{M}(t) has not exceeded the auto-clean limit LIM0 during a first safety time period ΔT₁, and when the control unit CNT1 determines that the filter FIL1 is not clean. A complete filter cleaning operation AFC may be performed at the end of the first safety time period ΔT₁.

A shutdown time period ΔT_{SHUT} may be started at the time t_{f} when the current P_{M}(t) falls below the auto-stop limit LIM2. A second safety time period ΔT₂ for stopping rotation of the fan FAN1 may start when the complete filter cleaning operation AFC has been performed. The control unit CNT1 may stop rotation of the fan FAN1 at the end of the second safety time period ΔT₂ when the control unit CNT1 determines that the current P_{M}(t) has not exceeded the auto-stop limit LIM2 during the second safety time period ΔT₂, and when the control unit CNT1 determines that the filter FIL1 is clean. The control unit CNT1 may determine that the filter FIL1 is clean after the complete filter cleaning operation.

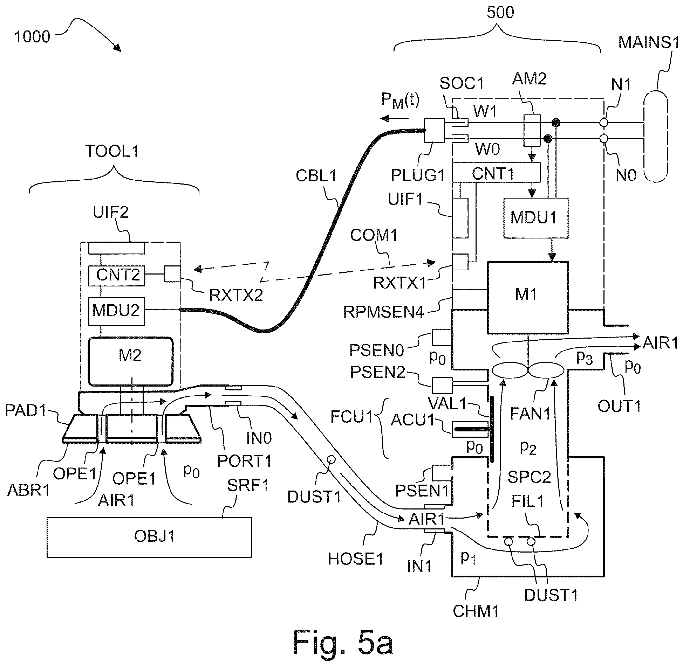

Referring to Fig. 5a, the dust extractor 500 has a control unit CNT1 for controlling operation of the dust extractor 500. The dust extractor 500 has the filter cleaning unit FCU1 for cleaning the filter FIL1 with cleaning air pulses PU. The filter cleaning unit FCU1 may comprise e.g. a valve VAL1, which is opened and/or closed by an actuator ACU1. The dust extractor 500 may have the motor driving unit MDU1 for providing driving electric currents for the motor M1. The dust extractor 500 may have a user interface UIF1 for receiving user input and/or for providing information to a user. The dust extractor 500 may have one or more sensors PSEN0, PSEN1, PSEN2, RPMSEN4 for measuring operating parameters (e.g. p₀, p₁, p₂, NRPM) of the dust extractor 500. The dust extractor 500 may optionally have a communication unit RXTX1 for forming a communication link COM1 e.g. with the power tool TOOL1.

The dust extractor 500 may receive electric current from the mains network MAINS1 via two or more nodes N0, N1. The electric current may be distributed from the nodes N0, N1 to the outlet SOC1. The current measuring unit AM2 may measure the electric current P_{M}(t) drawn by the power tool TOOL1. The nodes N0, N1 may distribute electric current also to the motor driving unit MDU1 of the dust extractor 500.

The power tool TOOL1 may receive the electric current P_{M}(t) via the outlet SOC1, via a connector PLUG1, and via a cable CBL1. The power tool TOOL1 may have a control unit CNT2 for controlling operation of the power tool TOOL1. The power tool TOOL1 may have a motor driving unit MDU2 for providing driving electric currents for the motor M2. The power tool TOOL1 may have a user interface UIF2 for receiving user input and/or for providing information to a user. The power tool TOOL1 may optionally have a communication unit RXTX2 for forming a communication link COM1 e.g. with the dust extractor 500.

The dust particles DUST1 may be conveyed from a port PORT1 of the power tool TOOL1 to the inlet IN1 of the dust extractor 500 via a hose HOSE1.

The power tool TOOL1 may have a supporting element PAD1 for supporting a processing element ABR1. The supporting element PAD1 and the processing element ABR1 may be moved by the motor M2. The movements of the processing element ABR1 may form dust particles DUST1 from the workpiece OBJ1. The supporting element PAD1 and/or the processing element ABR1 may have one or more openings OPE1 for drawing the dust particles DUST1 with the air flow AIR1.

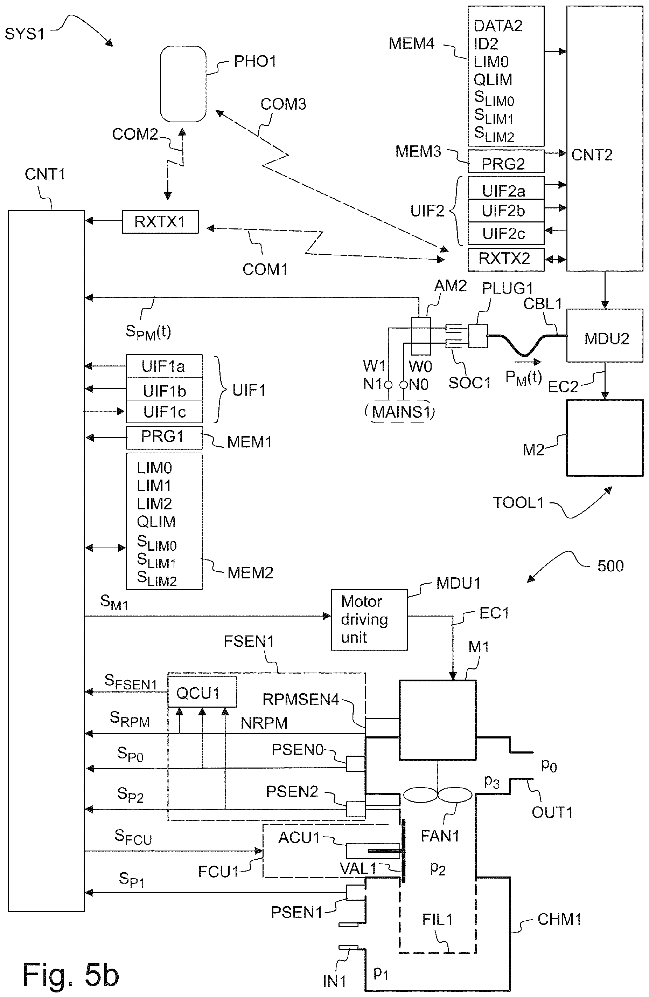

Fig. 5b shows, by way of example, the control system SYS1 of the apparatus 1000. The control system SYS1 may comprise the control unit CNT1, the filter cleaning unit FCU1, and the current measuring unit AM2.

The current measuring unit AM2 may form a current indicator signal S_{PM}(t), which is indicative of the current P_{M}(t) of the power tool TOOL1. The current measuring unit AM2 may form a current indicator signal S_{PM}(t), which is indicative of the electric current P_{M}(t) drawn via the outlet SOC1. The control unit CNT1 may control automatic filter cleaning AFC based on the current P_{M}(t). The control unit CNT1 may receive the current indicator signal S_{PM}(t). The indicator signal S_{PM}(t) may be e.g. a digital signal. The control unit CNT1 may compare the current P_{M}(t) with the limit values LIM0, LIM1, LIM2 by using the indicator signal S_{PM}(t). The control unit CNT1 may compare the current P_{M}(t) with the limit values LIM0, LIM1, LIM2 by comparing the indicator signal S_{PM}(t) with corresponding digital limit values S_{LIM0}, S_{LIM1}, S_{LIM2}.

The control unit CNT1 may control operation of the dust extractor 500 by comparing the current signal S_{PM}(t) with one or more corresponding signal limit values S_{LIM0}, S_{LIM1}, S_{LIM2}. The measured electric current P_{M}(t) may be compared with the limit LIM0, LIM1, and/or LIM2 by comparing the current signal S_{PM} with a signal value (S_{LIM0}, S_{LIM1}, S_{LIM2}), which corresponds to the limit LIM0, LIM1, and/or LIM2.

The control unit CNT1 may control rotation of the motor M1 of the suction fan FAN1 based on the current P_{M}(t). The control unit CNT1 may start rotation of the motor M1 when the electric current P_{M}(t) exceeds an auto-start limit LIM1. The control unit CNT1 may start a shutdown procedure e.g. when the electric current P_{M}(t) falls below an auto-stop limit LIM2.

The control system SYS1 may comprise the motor driving unit MDU1. The motor driving unit MDU1 may drive the motor M1 of the dust extractor 500 by forming one or more electric driving currents EC1. The motor driving unit MDU1 may form the driving currents EC1 from electric current received e.g. from the mains network MAINS1. The motor driving unit MDU1 may form the driving currents EC1 according to a motor control signal S_{M1} formed by the control unit CNT1.

The control system SYS1 may comprise a user interface UIF1 of the dust extractor 500. The user interface UIF1 may comprise one or more input devices UIF1a, UIF1b. The input device UIF1a, UIF1b may comprise e.g. one or more push buttons, a rotatable knob and/or a touchscreen. The user interface UIF1 may be arranged to receive user input from a user to the control unit CNT1. The user interface UIF1 may comprise one or more output devices UIF1c for providing information to the user. The output device UIF1c may be arranged to provide e.g. visual indicator and/or an audio signal. The user may e.g. select an operating mode of the dust extractor by providing user input via the user interface UIF1. The dust extractor 500 may have e.g. a first operating mode where the auto-start functionality is enabled. The dust extractor 500 may have e.g. a second operating mode where rotation of the suction fan is not controlled based on the electric current drawn from the outlet SOC1. The user may select e.g. a nominal suction power of the dust extractor by providing user input via the user interface UIF1. The control system SYS1 may provide information to the user via the user interface UIF1. For example, the control system SYS1 may provide an indication to the user during extended active processing that active processing with the power tool should be interrupted in order to enable the automatic filter cleaning AFC.

The control unit CNT1 may be implemented e.g. by one or more data processors. The control system SYS1 may comprise a machine-readable memory MEM1 for storing computer program code PRG1. The dust extractor 500 may have a memory MEM2 for storing limits LIM0, LIM1, LIM2, Q_{LIM}. The dust extractor 500 may have a memory MEM2 for storing signal values S_{LIM0}, S_{LIM1}, S_{LIM2}, which correspond to the limits LIM0, LIM1, LIM2.

The control unit CNT1 may be implemented e.g. by executing program code PRG1 by one or more data processors of the control system SYS1. The program code PRG1, when executed by one or more processors of the control unit CNT1 may cause the control unit CNT1 to perform one or more method steps of the present method. The program code PRG1 may cause the control unit CNT1 to control automatic filter cleaning. The program code PRG1 may cause the control unit CNT1 to start or prevent operation of the filter cleaning unit FCU1. The program code PRG1 may cause the control unit CNT1 to control rotation of the suction fan FAN1.

The control unit CNT1 of the dust extractor 500 may be arranged to control automatic filter cleaning AFC by comparing the current P_{M}(t) with the auto-clean limit LIM0. The control unit CNT1 may control starting of the rotation of the fan FAN1 by comparing the current P_{M}(t) with the auto-start limit LIM1. The control unit CNT1 may control stopping of the rotation of the fan FAN1 by comparing the current P_{M}(t) with the auto-stop limit LIM2.

The power tool TOOL1 may have a control unit CNT2 for controlling operation of the power tool TOOL1. The control unit CNT2 may control rotation of the motor M2 of the power tool TOOL1. The control unit CNT2 may control rotation of the motor M2 e.g. by providing a control signal to the motor driving unit MDU2. The motor driving unit MDU2 may form driving electric currents EC2 for the motor M2. The power tool TOOL1 may optionally have a memory MEM3 for storing program code PRG2. The control unit CNT2 may control operation of the power tool TOOL1 by executing the program code PRG2. The power tool TOOL1 may have a user interface UIF2 for receiving user input from the user and/or for providing information to the user. The user interface UIF2 may comprise e.g. input devices UIF2a, UIF2b. The user interface UIF2 may comprise e.g. one or more output devices UIF2c. The control unit CNT2 may control rotation of the motor M2 based on the user input received via the user interface UIF2. The user may e.g. start rotation of the motor M2 by pressing a button of the user interface UIF2. In an embodiment, the control unit CNT2 and the motor driving unit MDU2 may also be implemented by a switch which electrically connects the motor M2 to one or more electrical conductors of the cable CBL1.

The control system SYS1 of the apparatus 1000 may further comprise the control unit CNT2, the motor driving unit MDU2, the communication unit RXTX2, and the memory MEM3, MEM4 of the power tool TOOL1.

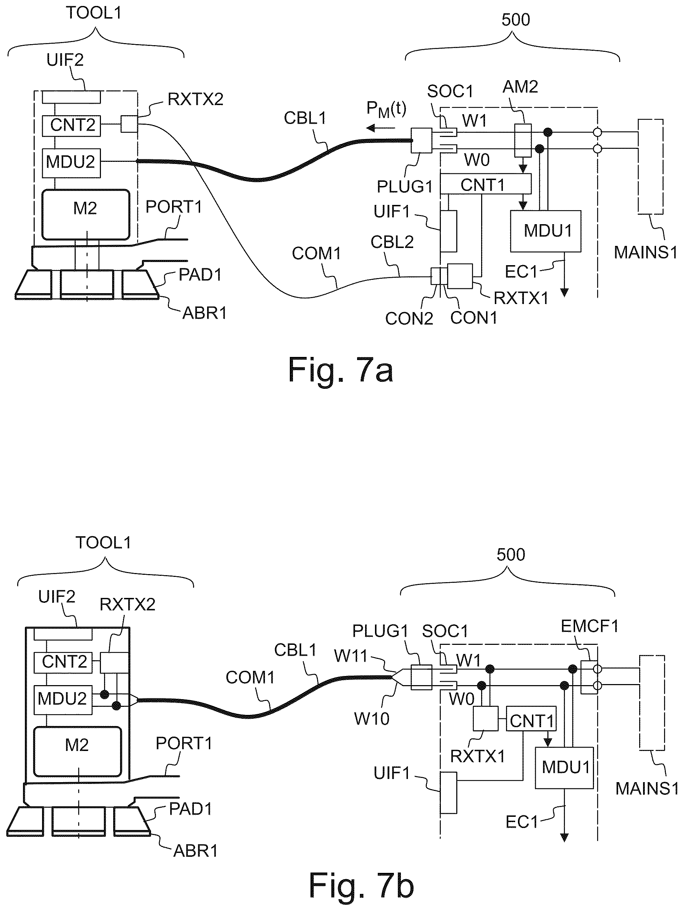

The dust extractor 500 may comprise a first communication unit RXTX1, the power tool TOOL1 may comprise a second communication unit RXTX2. The first communication unit RXTX1 may be arranged to establish a communication link COM1 with the second communication unit RXTX2. The communication link COM1 may be wireless (Fig. 5a and Fig. 5b) or wired (Fig. 7a and Fig. 7b). The communication unit RXTX1 may enable communication e.g. via Bluetooth, wireless local area network, and/or wireless mobile communications network.

The power tool may comprise a memory for storing tool-specific data of the power tool. The data may comprise e.g. a nominal tool-specific idle current value of the power tool. The data may be communicated to the dust extractor. The data may be communicated from the power tool to the dust extractor via a communication link. The data may be communicated from the power tool to the dust extractor via a communication link. The control system may determine e.g. the auto-start limit, the auto-stop limit, and/or the auto-clean limit from the communicated data. The control unit of the dust extractor may subsequently use the auto-clean limit for enabling and disabling activation of the automatic filter cleaning, based on the current of the power tool. Using the tool-specific limit may ensure more reliable operation, instead of using a general (common) limit for all power tools which are connectable to the dust extractor.

The power tool may optionally have a memory MEM4 for storing one or more predetermined limits (LIMO, LIM1, LIM2, Q_{LIM}, S_{LIM0}, S_{LIM1}, S_{LIM2}). The one or more limits may be communicated from the power tool TOOL1 to the dust extractor 500 e.g. via the communication link COM1. The control unit of the dust extractor 500 may subsequently control automatic filter cleaning AFC and rotation of the fan FAN1 based on the limits (LIMO, LIM1, LIM2, Q_{LIM}, S_{LIM0}, S_{LIM1}, S_{LIM2}).

The power tool may have a memory MEM4 for storing an identification code ID2 of the power tool TOOL1. The identification code ID2 may be communicated from the power tool TOOL1 to the dust extractor 500. The dust extractor 500 may have a memory MEM2 for storing limits (LIMO, LIM1, LIM2, Q_{LIM}, S_{LIM0}, S_{LIM1}, S_{LIM2}) for several different power tools. The control system SYS1 may be arranged to retrieve the tool-specific limits from the memory MEM2 based on the identification code ID2. The control unit CNT1 of the dust extractor 500 may subsequently control automatic filter cleaning AFC and rotation of the fan FAN1 based on the limits (LIMO, LIM1, LIM2, Q_{LIM}, S_{LIM0}, S_{LIM1}, S_{LIM2}).

The control system may retrieve an auto-start limit, an auto-stop limit and/or an auto-clean limit from a memory based on the code. The control system may retrieve a nominal tool-specific idle current value e.g. from a memory of the dust extractor based on the code of the power tool. The control system may retrieve an auto-start limit, an auto-stop limit and/or an auto-clean limit from the memory based on the code.

Data DATA2 stored in the memory of the power tool may comprise e.g. a code ID2. The code may indicate e.g. a power category of the power tool and/or a type of the power tool. The code may be e.g. a shared identification code which may be common for all power tools which have similar mechanical and electrical properties. Yet, the code may be a unique identification code of that individual power tool.

The control system SYS1 of the apparatus 1000 may comprise a communication device PHO1 for receiving user input from a user, for providing information to the user, and/or for processing data. The communication device PHO1 may communicate e.g. via wireless communication. The communication device PHO1 may be e.g. a mobile phone, or a portable computer, which has communication capabilities. The communication device PHO1 may communicate with the dust extractor 500 e.g. via a communication link COM2. The communication device PHO1 may communicate with the power tool TOOL1 e.g. via a communication link COM3. The communication device PHO1 may receive one or more limits LIM0, LIM1, LIM2 e.g. from the power tool TOOL1 or from the dust extractor 500. The communication device PHO1 may retrieve one or more limits LIM0, LIM1, LIM2 e.g. from an internet server based on the identification code ID2 of the power tool TOOL1. One or more limits LIM0, LIM1, LIM2 may be retrieved, determined, approved and/or modified by using the communication device PHO1. A user may retrieve, determine approve and/or modify one or more limits LIM0, LIM1, LIM2 by using the communication device PHO1. The control unit CNT1 of the dust extractor 500 may subsequently control automatic filter cleaning and rotation of the fan based on the one or more limits LIM0, LIM1, LIM2.

The dust extractor 500 may receive data from the power tool TOOL1 via a communication link COM1. The dust extractor 500 may send data to the power tool TOOL1 via the communication link COM1. The communication device PHO1 may receive data from the dust extractor 500 via a communication link COM2. The communication device PHO1 may send data to the dust extractor 500 via the communication link COM2. The communication device PHO1 may receive data from the power tool TOOL1 via a communication link COM3. The communication device PHO1 may send data to the power tool TOOL1 via the communication link COM3. The communication device PHO1 may optionally communicate e.g. with an internet server.

The identification code ID2 may also be e.g. an optical code which may be read e.g. by using a camera of the communication device PHO1. The identification code ID2 may also be stored in an RFID tag of the power tool TOOL1, wherein the identification code ID2 may be read by using an RFID reader of the communication device PHO1.

The same dust extractor 500 may be used with several different power tools, which may have e.g. different idle current levels. A first power tool may draw a higher idle current from the electric outlet of the dust extractor, and a second power tool may draw a lower idle current from the outlet. An optimum limit LIM0 for controlling automatic filter cleaning with the first power tool may be different from controlling automatic filter cleaning with the second power tool.

The method may comprise e.g. using one or more first tool-specific limits LIM0, LIM1, LIM2 with the first power tool, and using one or more second tool-specific limits LIM0, LIM1, LIM2 with the second power tool. The method may comprise using a first tool-specific auto-clean limit LIM0 with the first power tool, and a second different tool-specific auto-clean limit LIM0 with the second power tool.

In an embodiment, the control system SYS1 of the apparatus 1000 may be arranged to measure an idle current level P_{IDLE} of the power tool TOOL1, and to calculate one or more limits LIM0, LIM1, LIM2 from an idle current level P_{IDLE} of the power tool TOOL1. The auto-clean limit LIM0 may be e.g. in the range of 105% to 200% of the idle current P_{IDLE} of the power tool TOOL1. The calculation may be carried out e.g. by the control unit CNT1 of the dust extractor 500, or by a data processor of the communication device PHO1. A nominal idle current level P_{IDLE} may be retrieved from a memory of the power tool TOOL1. A nominal idle current level P_{IDLE} may be retrieved from an internet server or from a memory of the dust extractor 500 based on an identification code ID2 of the power tool TOOL1.

The current level P_{IDLE} may also be measured e.g. by a current measuring unit AM2 of the dust extractor 500. The control system SYS1 of the apparatus 1000 may be arranged to determine an idle current level P_{IDLE} of the power tool TOOL1 by analyzing current P_{M}(t) of the power tool TOOL1, wherein the control system SYS1 may be arranged to determine the auto-clean limit LIM0 from the idle current level P_{IDLE}. The control system SYS1 may be arranged to calculate the auto-clean limit LIM0 from the idle current level (P_{IDLE}). The analysis may be carried out e.g. by the control unit CNT1 of the dust extractor 500, or by a data processor of the communication device PHO1. The control system SYS1 may be configured to determine e.g. that the idle current level P_{IDLE} is equal to a stable non-zero measured current level of the power tool.

The control system SYS1 of the apparatus 1000 may also be arranged to determine an idle current value P_{IDLE} of the power tool TOOL1 from a current P_{M}(t), which is measured by the current measuring unit AM2 when a user confirms by providing user input via a user interface UIF1, UIF2 that the power tool TOOL1 is idling. The control system SYS1 may be arranged to determine an idle current value P_{IDLE} from a current P_{M}(t), which is measured by the current measuring unit AM2 when the power tool TOOL1 is in idle, wherein the user also confirms by providing user input via a user input that the power tool TOOL1 is in idle

The measuring unit AM2 may be arranged to provide a current signal S_{PM}(t), which is indicative of the electric current P_{M}(t) drawn by the power tool TOOL1. The current signal S_{PM}(t) may be e.g. a digital number. The auto-clean limit value LIM0 may correspond to an auto-clean signal limit value. The auto-start limit value LIM1 may correspond to an auto-start signal limit value. The auto-stop limit value LIM2 may correspond to auto-stop signal limit value. The signal limit values may be e.g. digital numbers. The control unit CNT1 may compare the current P_{M}(t) of the power tool TOOL1 with a limit value LIM0, LIM1, LIM2 by comparing the current signal S_{PM}(t) with the corresponding signal limit value (S_{LIM0}, S_{LIM1}, S_{LIM2}).

For example, the electric current P_{M}(t) may be determined to exceed the limit value LIM0 if the indicator signal S_{PM}(t) exceeds a signal limit value S_{LIM0}, which corresponds to the limit value LIM0. The electric current P_{M}(t) may be determined to be equal to the limit value LIM0 if the indicator signal S_{PM}(t) is equal to the signal limit value S_{LIM0}.

For example, the electric current P_{M}(t) may be determined to exceed the limit value LIM1 if the indicator signal S_{PM}(t) exceeds a signal limit value S_{LIM1}, which corresponds to the limit value LIM1. The electric current P_{M}(t) may be determined to be equal to the limit value LIM1 if the indicator signal S_{PM}(t) is equal to the signal limit value S_{LIM1}.

For example, the electric current P_{M}(t) may be determined to exceed the limit value LIM2 if the indicator signal S_{PM}(t) exceeds a signal limit value S_{LIM2}, which corresponds to the limit value LIM2. The electric current P_{M}(t) may be determined to be equal to the limit value LIM2 if the indicator signal S_{PM}(t) is equal to the signal limit value S_{LIM2}.

The measuring unit AM2 measure one or more electric currents drawn by the power tool TOOL1. The measuring unit AM2 may measure e.g. averaged or RMS electric current P_{M}(t) of the power tool TOOL1. RMS means root mean square.

The motor M1 may be e.g. an asynchronous or synchronous electric motor. The motor M1 may be e.g. an alternating current motor or a direct current motor. The motor M1 may be e.g. an universal motor. The motor M1 may be e.g. brushless direct current motor.

The motor driving unit MDU1 may comprise e.g. a relay to switch on and off one or more driving currents EC1 of the motor M1. The motor driving unit MDU1 may comprise e.g. one or more electromechanical relays, thyristors and/or transistors for controlling one or more operating currents of the motor M1. The motor driving unit MDU1 may comprise e.g. power transistors and/or thyristors for providing the electric currents EC1 for the motor M1. The motor driving unit MDU1 may be arranged to adjust one or more driving currents EC1 by pulse width modulation or by phase fired control. The motor driving unit MDU1 may comprise e.g. a frequency converter to adjust the frequency of one or more driving currents EC1.

The motor driving unit MDU1 may comprise a frequency converter for reducing or increasing the rotation speed of the motor M1. The frequency converter may be implemented e.g. by using a microcontroller, gate drivers and IGBTs. IGBT means Insulated Gate Bipolar Transistor. The motor driving unit MDU1 may provide one or more electric currents EC1 in response to the motor control signal S_{M1}. The motor driving unit MDU1 may comprise e.g. a microcontroller, gate drivers and transistors to form the one or more driving currents EC1. The control unit CNT1 may form the motor control signal S_{M1} for starting and stopping rotation of the motor M1.

The nodes N0, N1 (Fig. 5a) may be connected to the AC mains network MAINS1. AC means alternating current. The voltage of the network MAINS1 may be e.g. in the range of 90 V to 250 V, and the frequency of the network may be e.g. 50 Hz or 60 Hz. The current measuring unit AM2 may be arranged to measure e.g. an electric current of the first conductor W1 and/or an electric current of the second conductor WO.

The electric outlet SOC1 may be e.g. a socket according to the standard CEE 7/3, which is also known as the "Schuko" socket. The standard CEE 7/3 has been determined by the International Commission on the Rules for the Approval of Electrical Equipment (IECEE). Sockets according to CEE 7/3 are widely in use e.g. in Germany.

The electric outlet SOC1 may be e.g. a socket according to the standard NEMA 5-15 grounded (Type B). The standard NEMA has been determined by the National Electrical Contractors Association (NECA). Sockets according to the standard NEMA 5-15 grounded (Type B) are widely in use e.g. in the USA.

The dust extractor 500 may comprise one or more sensors PSEN0, PSEN1, PSEN2 e.g. for measuring the pressures p₀, p₁, p₂. The dust extractor 500 may comprise one or more sensors RPMSEN4 e.g. for measuring the rotation speed NRPM of the motor M1 and the fan FAN1. The sensors may form corresponding sensor signals S_{P0}, S_{P1}, S_{P2}, S_{RPM} for the control system SYS1. The sensor signals S_{P0}, S_{P1}, S_{P2}, S_{RPM} may be used e.g. for determining an operating state of the dust extractor 500. The sensor signals S_{P0}, S_{P1}, S_{P2}, S_{RPM} may be used e.g. for estimating or measuring an amount of dust deposited on the filter FIL1.

The amount of dust deposited on the filter FIL1 may be estimated e.g. from the measured pressure difference (p₂-p₁) across the filter FIL1.

The control unit CNT1 may determine that the filter FIL1 is clean e.g. if the measured pressure difference (p₂-p₁) across the filter FIL1 is determined to be within the limits of a clean filter. A filter cleaning operation AFC may be performed after the power tool TOOL1 has been in active use. The pressure difference (p₂-p₁) across the filter FIL1 may be measured after the filter cleaning operation AFC. An additional filter cleaning operation AFC may be performed if the pressure difference (p₂-p₁) indicates that the filter is not yet clean.

In an embodiment, the control unit CNT1 may be arranged to start or delay the cleaning based on a detected need for cleaning the filter FIL1. The filter cleaning unit FCU1 may be arranged to clean the filter FIL1 based on a detected need for cleaning the filter FIL1. For example, the control unit CNT1 may determine based on the measured current P_{M}(t) that automatic filter cleaning AFC is allowed, but the control unit CNT1 may still prevent a filter cleaning operation if there is no detected need to clean the filter FIL1. For example, the control unit CNT1 may prevent a filter cleaning operation if measured pressure difference (p₂-p₁) across the filter FIL1 is so low that there is no need to clean the filter. For example, the control unit CNT1 may use a reduced time interval between consecutive filter cleaning operations if the measured pressure difference (p₂-p₁) across the filter FIL1 indicates that the filter FIL1 has increased flow resistance.

The control unit CNT1 may delay or prevent a start of a filter cleaning operation AFC if the pressure difference (p₂-p₁) indicates that there is no need to clean the filter FIL1. This determination may ensure that the filter is only cleaned when necessary, optimizing the performance and efficiency of the apparatus 1000.

The control unit CNT1 may be arranged to start a filter cleaning operation AFC based on a determined need for cleaning the filter FIL1. The need for cleaning the filter FIL1 may be determined e.g. based on one or more sensor signals (S_{P0}, S_{P1}, S_{P2}, S_{RPM}) obtained from one or more sensors PSEN0, PSEN1, PSEN2, RPMSEN4, FSEN1 of the dust extractor 500.

The need for cleaning the filter FIL1 may be determined e.g. based on a measured pressure difference (p₂-p₁) across the filter FIL1, based on an estimated amount of dust DUST1 collected on the filter FIL1, or based on a measured amount of dust DUST1 collected on the filter FIL1.

The control unit CNT1 may be arranged to start one or more additional filter cleaning operations AFC if at least one sensor signal indicates a need to clean the filter FIL1 after a previous filter cleaning operation AFC.

The control system SYS1 may comprise the flow sensor FSEN1 for measuring a flow rate Q_{AIR} of the air flow AIR1 drawn via the dust extractor 500. The flow sensor FSEN1 may form a flow rate signal S_{FSEN1} indicative of the measured air flow rate Q_{AIR} of the air flow AIR1 drawn via the dust extractor 500. The flow rate signal S_{FSEN1} may be e.g. indicative of the flow rate drawn via the suction fan FAN1 and/or via the inlet IN1.

The flow sensor FSEN1 may be arranged to calculate the air flow rate Q_{AIR} from a measured pressure difference (Δp) across the suction fan FAN1 and from a rotation speed NRPM of the suction fan FAN1. The downstream pressure p₃ of the fan FAN1 may be substantially equal to the ambient pressure p₀. For practical purposes, the pressure difference across the suction fan FAN1 may be measured by measuring the difference (p₀-p₂) between the ambient pressure p₀ and the upstream pressure p₂. The flow sensor FSEN1 may be arranged to calculate the air flow rate Q_{AIR} e.g. from the measured rotation speed NRPM of the motor M1 and from the measured pressure difference (p₀-p₂) across the suction fan FAN1. The flow sensor FSEN1 may be arranged to form the flow rate signal S_{FSEN1} e.g. by calculating from the signals S_{RPM}, S_{P0}, S_{P2}. The flow sensor FSEN1 may comprise a calculation unit QCU1 for performing calculations for the flow rate signal. The calculation unit QCU1 may also be implemented by executing computer program code with the control unit CNT1.

The flow sensor FSEN1 may also be implemented e.g. by guiding at least a part of the flow via a venturi tube or by using a pitot tube. The flow rate may be calculated from measured pressures of the venturi tube or from measured pressures of the pitot tube. The flow sensor FSEN1 may comprise e.g. two or more pressure sensors PSEN0, PSEN1, PSEN2 for measuring the air flow rate Q_{AIR}.

The dust extractor may be e.g. an "M class" dust extractor or an "H class" dust extractor, as defined e.g. in the standard IEC 60335-2-69:2021.

In an embodiment, the filter cleaning operations AFC may be repeated according to a cleaning time interval ΔT_{CLN} until one or more sensor signals obtained e.g. from one or more pressure sensors indicate that the filter FIL1 is clean. The filter cleaning operations AFC may be repeated until a measured pressure difference over the filter FIL1 indicates that the filter is clean. The filter cleaning operations AFC may be repeated e.g. during idling of the power tool TOOL1 and/or during a shutdown, until the filter FIL1 is determined to be clean. The control unit CNT1 may be arranged to delay automatic cleaning AFC of the filter FIL1 if the electric current PM is higher than the auto-clean limit LIM0. The control unit CNT1 may override the delaying by starting forced cleaning if the measured air flow rate Q_{AIR} of the air flow AIR1 smaller than a minimum allowed limit Q_{LIM}.

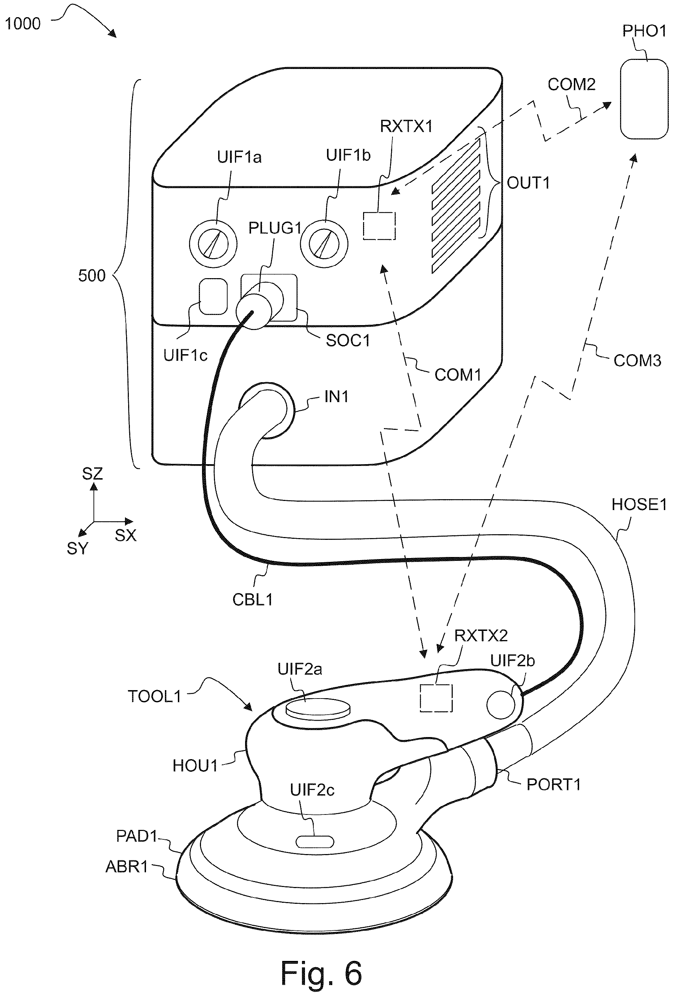

Referring to Fig. 6, the dust extractor 500 may comprise the suction air inlet IN1, the air outlet OUT1, the electric outlet SOC1 for the power tool, and user interface UIF1.

The user interface UIF1 may comprise e.g. an input device UIF1a for inputting a power setting of the motor M1 of the dust extractor 500. The user interface UIF1 may comprise e.g. an input device UIF1b for setting an operating mode of the dust extractor 500. The user interface UIF1 may comprise an output device UIF1c for providing information to a user. The output device UIF1c may be arranged to provide e.g. a visual indicator and/or an audio signal to indicate when automatic filter cleaning is allowed, prevented, or needed. The output device UIF1c may be e.g. display, which may be arranged to indicate when automatic filter cleaning is allowed, prevented, or needed.

The power tool TOOL1 may comprise a user interface UIF2. The user interface UIF2 may comprise input and output devices UIF2a, UIF2b, UIFc for receiving user input and/or for providing information to the user. The power tool TOOL1 may have a communication unit RXTX2 for communicating with a communication unit RXTX1 of the dust extractor 500 and/or with a communication device PHO1. The power tool TOOL1 may comprise a housing HOU1 that accommodates the motor M2, the control unit CNT2 and/or the user interface UIF2.

SX, SY, and SZ denote orthogonal directions.

Referring to Figs. 7a and 7b, the first communication unit RXTX1 may establish the communication link COM1 with the second communication unit RXTX2 also via wired communication. The communication link COM1 may be implemented e.g. via a cable CBL1 or CBL2.

Referring to Fig. 7a, the communication link COM1 may be implemented e.g. via a data cable CBL2. The data cable CBL2 may be e.g. an electrical cable or an optical cable. The data cable CBL2 may be detachable. The data cable CBL2 may be connected to the dust extractor 500 e.g. via a data connector CON2. The data connector CON2 of the cable CBL1 may be connected e.g. to a data connector CON1 of the dust extractor 500. Data may be sent via the data cable CBL2 e.g. by using serial communication and/or by using parallel communication. Serial communication may be implemented e.g. by using one of the following protocols: Universal Serial Bus (USB), Ethernet, CAN, I²S, RS-485, DMX512.

Referring to Fig. 7b, the communication link COM1 may be implemented e.g. via the electric power cable CBL1 of the power tool TOOL1. Data DATA2 and the electric power of the power tool TOOL1 may be transmitted via the same electric cable CBL1. The same electric wires W10, W11 of the cable CBL1 may carry the electric power of the motor M2 and the data DATA2.

The second communication unit RXTX2 may be arranged to send the data DATA2 via the cable CBL1, and the first communication unit RXTX1 may be arranged to receive the data DATA2 via the cable CBL1. The data may be transmitted by using power-line communication. The data may be transmitted via the power cable e.g. by using one of the following protocols: G3-PLC, PRIME, HPLC, Nessum WIRE, G.hn, HomePlug. The dust extractor 500 may optionally comprise an electric filter EMCF1 to prevent propagation of the data signals to the mains network MAINS1. The electric filter EMCF1 may comprise e.g. capacitors and/or inductors to suppress electrical interference generated by the communication units RXTX1, RXTX2.

In an embodiment, the control system SYS1 may also provide a possibility to start a filter cleaning operation manually. The control system SYS1 may be arranged to start a filter cleaning operation when a user provides user input via the user interface UIF1. The user may provide a start-to-clean-input via the user interface UIF1 for starting a filter cleaning operation. For example, the control system SYS1 may be arranged to start a filter cleaning operation when a user manually pushes a designated button of the user interface UIF1. The designated button may be called e.g. as a "push clean button". The manually started cleaning operation may override delaying of the cleaning, in a situation where the electric current (P_{M}) exceeds the auto-clean limit value LIM0. At a later stage, the control system SYS1 may allow delaying of the filter cleaning again e.g. after the manually started filter cleaning operation has been completed and/or after the control unit determines that the filter is clean.

For the person skilled in the art, it will be clear that modifications and variations of the devices and methods according to the present invention are perceivable. The figures are schematic. The particular embodiments described above with reference to the accompanying drawings are illustrative only and not meant to limit the scope of the invention, which is defined by the appended claims.

## Claims

1. An apparatus (1000), comprising a dust extractor (500) to extract dust particles (DUST1) produced during operation of a power tool (TOOL1),
the dust extractor (500) comprising:
- a fan (FAN1) to cause an airflow (AIR1),
- a motor (M1) to rotate the fan (FAN1),
- a filter (FIL1) to separate dust particles (DUST1) from the airflow (AIR1),
- a filter cleaning unit (FCU1) to automatically clean (AFC) the filter (FIL1) with cleaning air pulses (PU),
- a current measuring unit (AM2) to measure an electric current (P_{M}) drawn by the power tool (TOOL1),
- a control unit (CNT1) to control operation of the dust extractor (500),
wherein the control unit (CNT1) is arranged to compare the measured electric current (P_{M}) with an auto-clean limit value (LIM0), and to control automatic cleaning (AFC) of the filter (FIL1) based on a result of the comparison.

2. The apparatus (1000) of claim 1, wherein the control unit (CNT1) is arranged to delay automatic cleaning (AFC) of the filter (FIL1) when the electric current (P_{M}) is higher than the auto-clean limit (LIMO).

3. The apparatus (1000) of claim 2, wherein the control unit (CNT1) is arranged to start automatic cleaning (AFC) of the filter (FIL1) after the electric current (P_{M}) is no longer higher than the auto-clean limit value (LIMO).

4. The apparatus (1000) according to any of the claims 1 to 3, comprising a flow sensor unit (FSEN1) to measure a flow rate (Q_{AIR}) of the airflow (AIR1), wherein the control unit (CNT1) is arranged to start automatic cleaning (AFC) of the filter (FIL1) in a situation where the flow rate (Q_{AIR}) is lower than a minimum allowed value (LIMO).

5. The apparatus (1000) according to any of the claims 1 to 4, wherein the control unit (CNT1) is arranged to start an automatic cleaning operation (AFC) of the filter (FIL1) if the electric current (P_{M}) does not exceed the auto-clean limit value (LIMO) during a first safety time period (ΔT₁).

6. The apparatus (1000) according to any of the claims 1 to 5, wherein the control unit (CNT1) is arranged to abort an automatic cleaning operation (AFC) of the filter (FIL1) if the electric current (P_{M}) exceeds the auto-clean limit value (LIMO) during the automatic cleaning operation (AFC).

7. The apparatus (1000) according to any of the claims 1 to 6, wherein the control unit (CNT1) is arranged to start rotation of the fan (FAN1) when the electric current (P_{M}) exceeds an auto-start limit value (LIM1).

8. The apparatus (1000) according to any of the claims 1 to 7, wherein the control unit (CNT1) is arranged to stop rotation of the fan (FAN1) in a situation where the control unit (CNT1) determines that the filter (FIL1) is clean and that the electric current (P_{M}) has not exceeded an auto-stop limit value (LIM2) during a second safety time period (ΔT₂).

9. The apparatus (1000) according to any of the claims 1 to 8, wherein the control unit (CNT1) is arranged to determine that the filter (FIL1) is clean if time elapsed since a complete automatic cleaning operation (AFC) is less than a cleaning time period (ΔT_{CLN}), and if the electric current (P_{M}) has not exceeded the auto-clean limit value (LIMO) after the complete automatic cleaning operation (AFC) has been performed.

10. The apparatus (1000) according to any of the claims 1 to 9, wherein the control unit (CNT1) is arranged to determine a cleanliness state (C_{F}(t)) of the filter (FIL1) based on one or more sensor signals (S_{P1},S_{P2},S_{RPM}) obtained from one or more sensors (PSEN0, PSEN1, PSEN2, RPMSEN4) of the dust extractor (500), wherein the control unit (CNT1) is arranged to start a filter cleaning operation (AFC) based on the determined state (C_{F}(t)) of the filter (FIL1).

11. The apparatus (1000) according to any of the claims 1 to 10, wherein the auto-clean limit (LIMO) is a predetermined value, which is retrieved from a memory (MEM2) of the dust extractor (500).

12. The apparatus (1000) according to any of the claims 1 to 11, wherein the control system (SYS1) of the apparatus (1000) is arranged to determine the auto-clean limit (LIMO) based on data (DATA2) received from the power tool (TOOL1) via a communication link (COM1).

13. The apparatus (1000) according to any of the claims 1 to 12, wherein the dust extractor (500) comprises an electric connector (SOC1) for delivering the electric current to the power tool (TOOL1).

14. The apparatus (1000) according to any of the claims 1 to 13, wherein the apparatus (1000) comprises the power tool (TOOL1).

15. A method, comprising:
- producing dust (DUST1) with a power tool (TOOL1),
- extracting the produced dust (DUST1) with a dust extractor (500),
- measuring an electric current (P_{M}) of the power tool (TOOL1),
wherein the dust extractor (500) comprises:
- a fan (FAN1) to cause an airflow (AIR1),
- a motor (M1) to rotate the fan (FAN1),
- a filter (FIL1) to separate dust particles (DUST1) from the airflow (AIR1), and
- a filter cleaning unit (FCU1) to automatically clean (AFC) the filter (FIL1) with cleaning air pulses (PU),
wherein the method further comprises:
- measuring an electric current (P_{M}) drawn by the power tool (TOOL1),
- comparing the measured electric current (P_{M}) with an auto-clean limit value (LIM0), and
- controlling automatic cleaning (AFC) of the filter (FIL1) based on a result of said comparison.
